(19) **Europäisches Patentamt / European Patent Office / Office européen des brevets**

(11) **EP 3 425 325 B1**

(12) **EUROPEAN PATENT SPECIFICATION**

(45) Date of publication and mention
of the grant of the patent:
**07.09.2022   Bulletin 2022/36**

(21) Application number: **17750039.4**

(22) Date of filing: **18.01.2017**

(51) International Patent Classification (IPC):
**G01B 11/16** (2006.01)        **G06T 7/60** (2017.01)

(52) Cooperative Patent Classification (CPC):
**G01B 11/165; G01M 5/0008**

(86) International application number:
**PCT/JP2017/001503**

(87) International publication number:
**WO 2017/138314 (17.08.2017 Gazette 2017/33)**

(54) **DISPLACEMENT MEASUREMENT DEVICE, DISPLACEMENT MEASUREMENT METHOD, AND PROGRAM FOR SAME**

**VERSCHIEBUNGSMESSVORRICHTUNG, VERSCHIEBUNGSMESSVERFAHREN UND PROGRAMM DAFÜR**

**DISPOSITIF DE MESURE DE DÉPLACEMENT, PROCÉDÉ DE MESURE DE DÉPLACEMENT, ET PROGRAMME ASSOCIÉ**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.02.2016   JP 2016024187**

(43) Date of publication of application:
**09.01.2019   Bulletin 2019/02**

(73) Proprietor: **National Institute of Advanced
Industrial Science
and Technology
Tokyo 100-8921 (JP)**

(72) Inventors:
• **RI Shien**
  **Tsukuba-shi**
  **Ibaraki 305-8568 (JP)**
• **TSUDA Hiroshi**
  **Tsukuba-shi**
  **Ibaraki 305-8568 (JP)**
• **YAMADA Kaneyoshi**
  **Sendai-shi**
  **Miyagi 980-0021 (JP)**
• **NARITA Tomonori**
  **Sendai-shi**
  **Miyagi 980-0021 (JP)**
• **KOBAYASHI Masaru**
  **Sendai-shi**
  **Miyagi 980-0013 (JP)**
• **HAYASAKA Yohei**
  **Sendai-shi**
  **Miyagi 980-0013 (JP)**

(74) Representative: **Zacco GmbH
Bayerstrasse 83
80335 München (DE)**

(56) References cited:
**WO-A1-2015/008404      JP-A- 2006 061 222
JP-A- 2006 329 628       JP-A- 2009 264 852
JP-A- 2013 221 801       JP-A- 2015 141 151**

- TOMITA ET AL: "Deformation Distribution Measurement from Oblique Direction Using Sampling Moire Method", ADVANCEMENT OF OPTICAL METHODS IN EXPERIMENTAL MECHANICS, VOLUME 3 : PROCEEDINGS OF THE 2014 ANNUAL CONFERENCE ON EXPERIMENTAL AND APPLIED MECHANICS : [HELD IN GREENVILLE, SC, JUNE 2-5, 2014], SPRINGE , vol. 3 10 September 2013 (2013-09-10), pages 197-204, XP009517110, DOI: 10.1007/978-3-319-06986-9_22 ISBN: 978-1-4419-9299-4 Retrieved from the Internet: URL:https://ebookcentral.proquest.com/lib/epo-ebooks/reader.action?docID=1968547&ppg=202 [retrieved on 2014-09-08]
- S. RI ET AL: "Sampling Moir? Method for Accurate Small Deformation Distribution Measurement", EXPERIMENTAL MECHANICS., vol. 50, no. 4, 13 March 2009 (2009-03-13) , pages 501-508, XP055226594, US ISSN: 0014-4851, DOI: 10.1007/s11340-009-9239-4
- HARA TAKUYA ET AL: "Dynamic deformation measurement of real bridge using sampling moire camera", IEEE CONFERENCE ANTHOLOGY, IEEE, 1 January 2013 (2013-01-01), pages 1-6, XP032585141, DOI: 10.1109/ANTHOLOGY.2013.6784783 [retrieved on 2014-04-08]
- SHIEN RI AND TAKASHI MURAMATSU: "Theoretical error analysis of the sampling moiré method and phase compensation methodology for single-shot phase analysis", APPLIED OPTICS, OPTICAL SOCIETY OF AMERICA, WASHINGTON, DC; US, vol. 51, no. 16, 23 May 2012 (2012-05-23), pages 3214-3223, XP001575944, ISSN: 0003-6935, DOI: 10.1364/AO.51.003214 [retrieved on 2012-05-23]
- KIM SUNG-WAN ET AL: "Dynamic characteristics of suspension bridge hanger cables using digital image processing", NDT & E INTERNATIONAL, vol. 59, 15 May 2013 (2013-05-15), pages 25-33, XP028683020, ISSN: 0963-8695, DOI: 10.1016/J.NDTEINT.2013.05.002

**Description**

[Technical Field]

The present invention relates to a displacement measurement device, a displacement measurement method, and a program for the same.

[Background Art]

Embodiments of the present invention relate to a measurement device, a measurement method, and a program for measuring displacement or vibration of an object from repetitive patterns regularly repeated on the object imaged or recorded by an optical digital camera, a video camera, or other imaging means. Embodiments of the present invention can be used for analysis of displacement or vibration of an infrastructural object such as a bridge, a tunnel, a building, or a plant pipe, or another objects.

A displacement meter such as a contact type displacement meter, a non-contact type laser displacement meter, or an ultrasonic type displacement meter may be used to measure displacement of an object. By using such a displacement meter, highly reliable measurement results can be obtained. Further, sufficient temporal resolution may be obtained. However, in one measurement, only displacement in one direction can be measured for one measurement point. In order to ascertain displacement or vibration of an entire structure, it is necessary to install a displacement meter at each of a plurality of measurement points. In addition, a setting of a transmission path such as wirings from the displacement meter for aggregating measurement results becomes complicated. This causes an increase in costs and an analysis time. In particular, when a measurement target is a large-scale infrastructural object, the amount of work involved in installation of the displacement meter and costs thereof are significant.

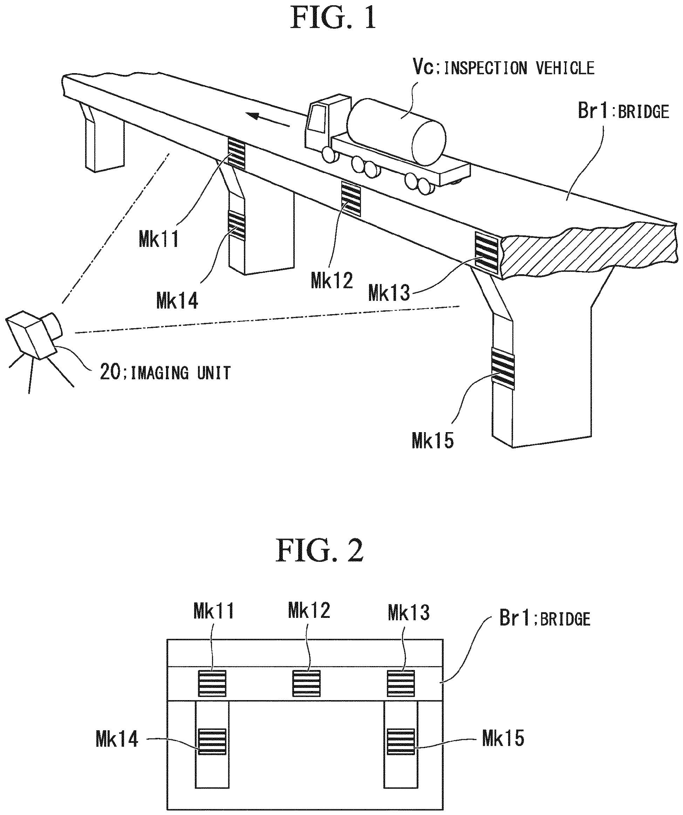

On the other hand, a full-field-of-vision measurement method using a captured image has been proposed as a scheme of measuring the displacement at a plurality of measurement points at a time. According to the full-field-of-vision measurement method, displacement distribution information of an entire object represented in a captured image can be acquired. Examples of the full-field-of-vision measurement method include a speckle interferometry method using a laser light source, a digital holography method, a digital image correlation method using a random pattern, and a sampling moire method using repetitive patterns. In recent years, displacement measurement of an infrastructural object using a digital image correlation method described in Patent Literature 1 or a sampling moire method described in Patent Literature 2 has been proposed. For example, in the sampling moire method, a plurality of markers Mk11 to Mk15 are installed at observation points on a side surface of a bridge Br1, as illustrated in Fig. 1. The amount of displacement at each observation point is obtained on the basis of a phase of a moire image generated from each of the markers Mk11 to Mk15 represented in an image captured by an imaging unit 20. By setting the imaging unit 20 in a direction perpendicular to the side surface of the bridge Br1, distances in a depth direction to the respective markers are constant, and therefore, common conditions are used for displacement analysis based on each marker.

Non-Patent Literature 2 discloses a deformation distribution measurement from oblique direction using the sampling moire method, by analyzing two-dimensional phases from a two-dimensional grating image attached on a surface of a specimen to obtain a phase difference distribution before and after deformation, thus providing a displacement distribution for x- and y- directions.

Patent Literature 4 discloses a phase-analysis method in which a displacement and shape of objects, such as a material and a structure, and a strain are detectable. Image/photographs of the predetermined area/region of the lattice pattern which exists on the surface of an object are taken with an optical camera, while changing the pixel of the origin for sampling for every pixel at equal intervals with respect to the image/photographed image.

Patent Literature 5 discloses a three-dimensional displacement measuring device for measuring the three-dimensional displacement in a predetermined prescribed position, with a several imaging parts, imaging the two-dimensional lattice pattern, an analysis part which calculates the phase difference, and a memory/storage part which memorize/stores the conversion matrix.Non-Patent Literature 1 discloses a deformation distribution measurement technique using sampling moire method. The measurement area of a target is attached with an adhesive tape of a known pitch grating firstly and the image during deformation recorded.

Non-Patent Literature 3 discloses a sampling moire method for a real-time measurement with the phase analysis performed from a single-shot image.

Non-Patent Literature 4 discloses a single-shot phase measurement technique developed for small-displacement distribution measurements. The theoretical phase error of the sampling moire method is analyzed.

Non-Patent Literature 5 discloses a study in which a non-contact measurement method is proposed to estimate the tension in hanger cables by using digital image processing. An image transform function was used to correct the geometric distortion between the deformed and undeformed images and to calculate the displacement in subpixels.

In summary, none of the patent-literature or non-patent-literature cited above discloses the below-described compensation of the image distortions, which are

[Citation List]

[Patent Literature]

[Patent Literature 1] Japanese Unexamined Patent Application, First Publication No.2006-329628

[Patent Literature 2] Japanese Unexamined Patent Application, First Publication No. 2015-141151

[Patent Literature 3] International Publication No. 2015/008404

[Patent Literature 4] Japanese Unexamined Patent Application, First Publication No. 2009-264852

[Patent Literature 5] Japanese Unexamined Patent Application, First Publication No. 2013-221801

[Non Patent Literature]

[Non-Patent Literature 1] Ri, S. Fujigaki, M., and Morimoto, Y., Sampling Moire Method for Accurate Small Deformation Distribution Measurement, Experimental Mechanics, Vol. 50, pp. 501-508(2010).
[Non-Patent Literature 2] Tomita et al., Deformation Distribution Measurement from Oblique Direction Using Sampling Mire Method, Advancement of Optical Methods in Experimental Mechanics, Vol. 3: Proceedings of the 2014 Annual conference on Experimental and Applied mechanics, Vol.3, pp. 197-204 (2013).
[Non-Patent Literature 3] Hara Takuya and Makiko Nakabo, Dynamic deformation measurement of real bridge using sampling moire camera, IEEE CONFERENCE ANTHOLOGY, IEEE, pp. 1-6, (2013).
[Non-Patent Literature 4] ·Shien· Ri and Takashi Muramatsu, Theoretical error analysis of the sampling moire method and phase compensation methodology for single-shot phase analysis, APPLIED OPTICS, Vol. 51, No. 16, pp. 3214-3223 (2012).
[Non-Patent Literature 5] Kim Sung-Wan and Kim Nam-Sik, Dynamic characteristics of suspension bridge hanger cables using digital image processing, NDT & E INTERNATIONAL, Vol. 59, pp. 25-33 (2013).

[Summary of Invention]

[Technical Problem]

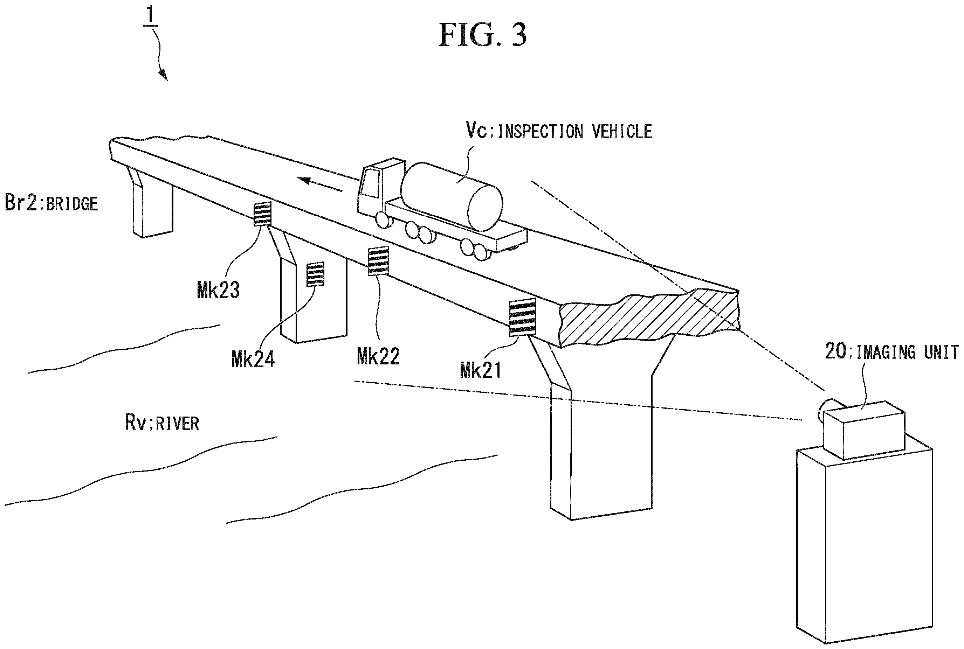

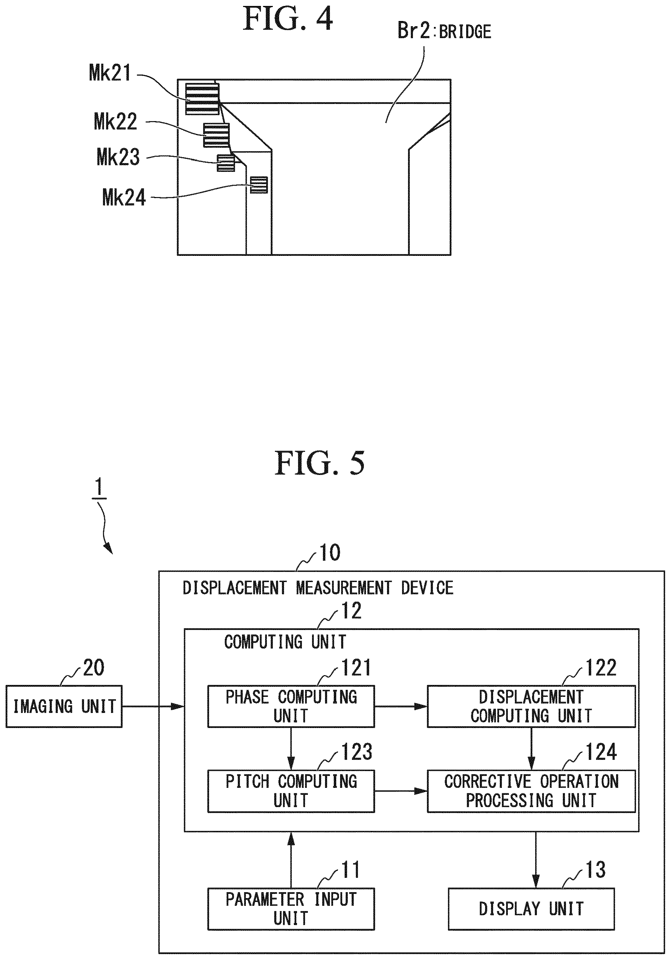

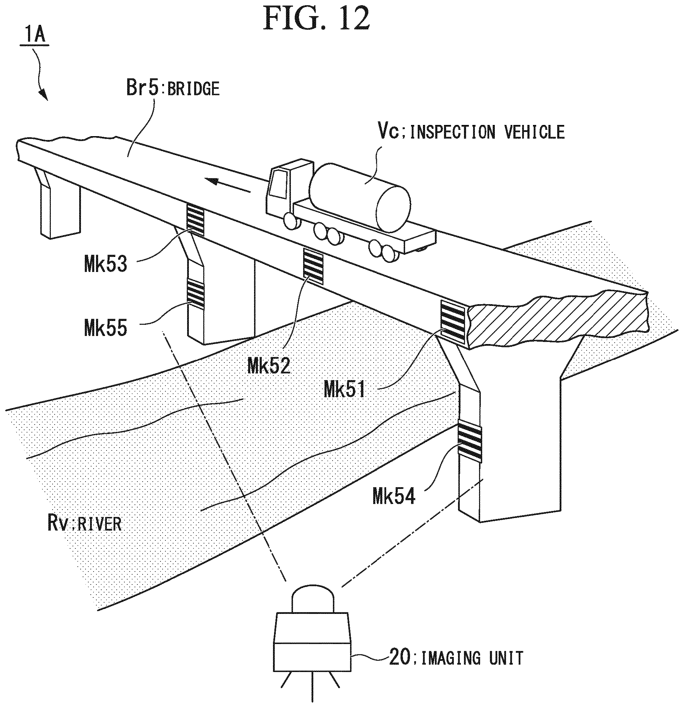

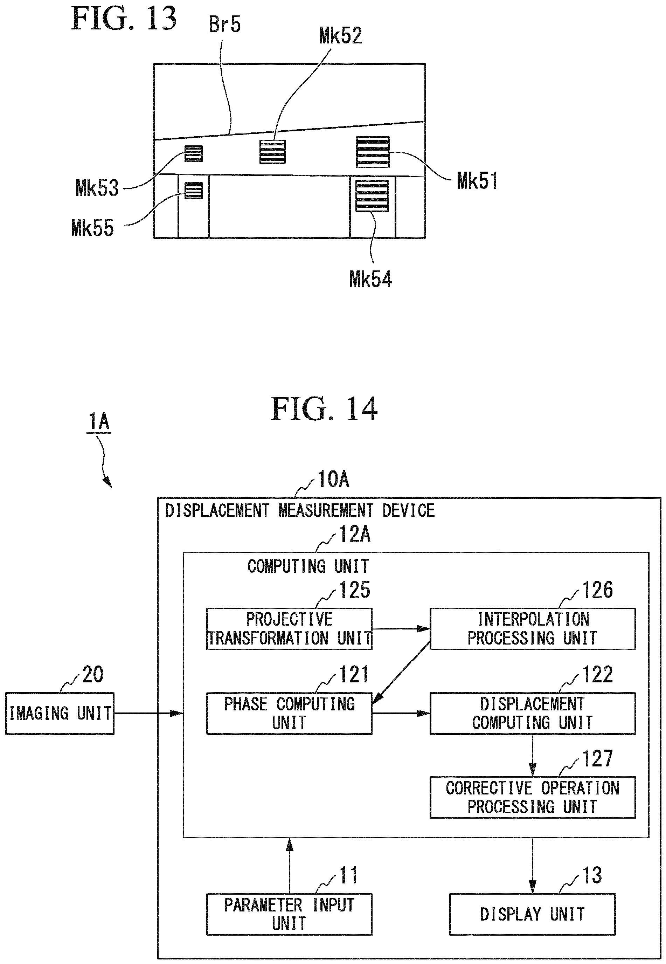

However, there are restrictions on a position at which the imaging unit that captures an image of a measurement target can be installed.
For example, in a structure such as a bridge passing through a river, a mountain area, a valley, or the like, the imaging unit cannot be installed in a direction perpendicular to a side surface of the structure in some cases. In such a case, it is conceivable to install the imaging unit in a direction oblique to the side surface of the structure. In an example illustrated in Fig. 12, an imaging unit 20 is installed on a river bank which is in a direction intersecting each of a bridge axis of a bridge Br5 and its normal direction, and images a side surface of the bridge Br5. In such a case, a distance from the imaging unit 20 depends on positions of the markers Mk51 to Mk55 installed on the side surface of the bridge Br5. As illustrated in Fig. 13, sizes of the markers or a spatial period of repetitive patterns, that is, pitches represented in the captured image, differ from one another. Since analysis conditions of displacement depends on the markers, analysis becomes complicated. In addition, measurement accuracy deteriorates due to blurring caused in the image due to vibration given to the imaging unit 20. It is also conceivable to install the imaging unit 20 on an abutment portion of the bridge Br2 as illustrated in Fig. 3, capture an image of the markers representing the repetitive patterns in a bridge axis direction which is the front of the structure, and measure the displacement of the structure using a measurement method such as a sampling moire method. A plurality of markers Mk21 to Mk24 are installed toward the bridge axis direction at positions with different distances in the depth direction from the imaging unit 20. In a captured image in a bridge axis direction illustrated in Fig. 4, an influence of the amount of displacement related to displacement of the imaging unit 20 becomes significant as a distance in a depth direction increases, unlike a captured image from a side surface of a bridge Br1 illustrated in Fig. 2. This also causes a measurement error based on the displacement of the imaging unit 20 for each marker.

The present invention has been made in view of the above points, and an object of the present invention is to provide a displacement measurement device, a displacement measurement method, and a program for the same capable of maintaining measurement accuracy regardless of installation conditions of an imaging unit.

[Solution to Problem]

(1) The present invention has been made to solve the above problems, and an aspect of the present invention is a displacement measurement device including: a phase computing unit that acquires an image with two or more repetitive patterns spatially repeated at a constant pitch, thins out the repetitive patterns at a predetermined thinned-out interval to generate a thinned-out image, and computes a phase of a moire image obtained by interpolating the thinned-out image; a displacement computing unit that computes a displacement of the repetitive patterns based on a difference between the phase at a time and the phase at another time; and a corrective operation unit that subtracts an offset from the displacement of one repetitive pattern of the repetitive patterns, the offset being a product of the displacement of another repetitive pattern of the repetitive patterns by a pitch ratio of a pitch of the another repetitive pattern to a pitch of the one repetitive pattern.

(2) Another aspect of the present invention is the displacement measurement device according to (1) further including a pitch computing unit that computes the pitch of the repetitive patterns based on a gradient of the phase.

(3) Still another aspect of the present invention is the displacement measurement device according to (1) or (2), that computes the offset by multiplying the displacement of the another repetitive pattern by a normalized pitch ratio, the normalized pitch ratio being a quotient of the pitch ratio of the pitch of the another repetitive pattern to the pitch of the one repetitive pattern by a second pitch ratio of the pitch of the another repetitive pattern represented on a subject to the pitch of the one repetitive pattern represented on the subject.

(4) Still another aspect of the present invention is a displacement measurement device including: a projective transformation unit that acquires an image with two or more repetitive patterns spatially repeated at a constant pitch and performs projective transformation of the image; a phase computing unit that thins out the repetitive patterns at a predetermined thinned-out interval to generate a thinned-out image, and computes a phase of a moire image obtained by interpolating the thinned-out images; a displacement computing unit that computes a displacement in the repetitive patterns based on a difference between the phase at a time and the phase at another time; and a corrective operation unit that subtracts an offset from the displacement of one repetitive pattern of the repetitive patterns, the offset being the displacement of another repetitive pattern of the repetitive patterns.

(5) Still another aspect of the present invention is a displacement measurement method including: an image acquisition step of acquiring an image with two or more repetitive patterns spatially repeated at a constant pitch; a phase calculation step of thinning out the repetitive patterns at a predetermined thinned-out interval to generate a thinned-out image and computing a phase of a moire image obtained by interpolating the thinned-out image; a displacement computing step of calculating a displacement of the repetitive patterns based on a difference between the phase a time and the phase at another time; and a corrective operation step of subtracting an offset from the displacement of one repetitive pattern of the repetitive patterns, the offset being a product of the displacement of another repetitive pattern of the repetitive patterns by a pitch ratio of a pitch of the another repetitive pattern to a pitch of the one repetitive pattern.

(6) Still another aspect of the present invention is a program causing a computer of a displacement measurement device to execute: an image acquisition procedure of acquiring an image with two or more repetitive patterns spatially repeated at a constant pitch; a phase computing procedure of thinning out the repetitive patterns at a predetermined thinned-out interval to generate a thinned-out image and computing a phase of a moire image obtained by interpolating a thinned-out image; a displacement computing procedure of computing a displacement of the repetitive patterns based on a difference between the phase at a time and the phase at another time; and a corrective operation procedure of subtracting an offset from the displacement of one repetitive pattern of the repetitive patterns, the offset being a product of the displacement of another repetitive pattern of the repetitive patterns by a pitch ratio of a pitch of the another repetitive pattern to a pitch of the one repetitive pattern.

[Advantageous Effects of Invention]

According to the present invention, it is possible to maintain measurement accuracy regardless of installation conditions of an imaging unit.

[Brief Description of Drawings]

Fig. 1 is a diagram illustrating an example of an arrangement of a measurement target and an imaging unit in a displacement measurement system of the related art.

Fig. 2 is a diagram illustrating an example of an image captured by the imaging unit according to the displacement measurement system of the related art.

Fig. 3 is a diagram illustrating an example of an arrangement of a measurement target and an imaging unit in a displacement measurement system according to a first embodiment.

Fig. 4 is a diagram illustrating an example of an image captured by the imaging unit according to the first embodiment.

Fig. 5 is a block diagram illustrating a functional configuration of the displacement measurement system according to the first embodiment.

Fig. 6 is a flowchart showing a displacement measurement process according to the first embodiment.

Fig. 7 is a view illustrating an example of a captured image according to an example of the first embodiment.

Fig. 8 is a diagram illustrating an example of measurement of the amount of displacement according to an example of the first embodiment.

Fig. 9 is a diagram illustrating another example of the measurement of the amount of displacement according to an example of the first embodiment.

Fig. 10 is a view illustrating an example of installation of an imaging unit and markers according to another example of the first embodiment.

Fig. 11 is a diagram illustrating an example of measurement of the amount of displacement according to another example of the first embodiment.

Fig. 12 is a diagram illustrating an example of an arrangement of a measurement target and an imaging unit in a displacement measurement system according to a second embodiment.

Fig. 13 is a diagram illustrating an example of an image captured by the imaging unit according to the second embodiment.

Fig. 14 is a block diagram illustrating a functional configuration of the displacement measurement system according to the second embodiment.

Fig. 15 is a view illustrating an example of a projective transformation according to the second embodiment.

Fig. 16 is a view illustrating another example of the projective transformation according to the second embodiment.

Fig. 17 is a flowchart showing a displacement measurement process according to the second embodiment.

Fig. 18 is a view illustrating an example of measurement of the amount of displacement according to an example of the second embodiment.

[Description of Embodiments]

(First embodiment)

Hereinafter, a first embodiment of the present invention will be described with reference to the drawings.

Fig. 3 is a diagram illustrating an example of an arrangement of a measurement target and an imaging unit 20 in a displacement measurement system 1 according to the first embodiment. In the example illustrated in Fig. 3, the displacement measurement system 1 measures displacement at a plurality of measurement points of a bridge Br2 which is the measurement target. Markers Mk21 to Mk24 are installed at the respective measurement points. The markers Mk21 to Mk24 each indicate patterns of horizontal stripes that are repeated at a predetermined pitch in a vertical direction. Further, all of the markers Mk21 to Mk24 are directed in a direction of which a normal direction is parallel to a bridge axis direction that is a longitudinal direction of the bridge Br2. The imaging unit 20 is installed on a bridge pier supporting one end of the bridge Br2, and markers Mk21 to Mk24 are shown in a field of view of the imaging unit 20. A direction in which the patterns indicated by the markers Mk21 to Mk24 are repeated in the captured image is the vertical direction. These patterns are used for measurement of the amount of displacement in the vertical direction at the measurement points at which the markers Mk21 to Mk24 are installed. A position of the imaging unit 20 is in a direction inclined downward from the bridge axis direction from a central portion of the bridge Br2, which is a starting point. Since the bridge Br2 is provided to cross a river Rv, the imaging unit 20 cannot be installed in a direction perpendicular to a side surface of the bridge Br2.

A captured image captured by the imaging unit 20 in an arrangement illustrated in Fig. 3 includes partial images representing the four markers Mk21 to Mk24. As illustrated in Fig. 4, a distance from the imaging unit 20 increases in an order of the markers Mk21, Mk22, Mk24, and Mk23, and therefore an area or a pitch decreases in an order of the markers Mk21, Mk22, Mk24, and Mk23. Further, the marker Mk24 is installed at a measurement point lower than the markers Mk21, Mk22, and Mk23 on a side surface of the bridge pier. Vibration due to traveling of an inspection vehicle Vc on the bridge Br2 is not directly transmitted to this measurement point. Therefore, this measurement point is used as a reference measurement point which is a reference point of the displacement.

(Displacement measurement device)

Next, a configuration of the displacement measurement system 1 according to the first embodiment will be described.

Fig. 5 is a block diagram illustrating a functional configuration of the displacement measurement system 1 according to the first embodiment. The displacement measurement system 1 includes a displacement measurement device 10 and an imaging unit 20.

The imaging unit 20 captures an image of the measurement target, and includes a storage unit that stores image data indicating the captured image. The imaging unit 20 includes a data interface that outputs the image data to the displacement measurement device 10. The imaging unit 20 is, for example, a digital video camera that sequentially captures images at predetermined time intervals. The imaging unit 20 may be a digital still camera that captures an image at a time instructed through an operation of a user.

The displacement measurement device 10 includes a parameter input unit 11, a computing unit 12, and a display unit 13.

Various parameters used for calculation of the displacement are input to the parameter input unit 11. The parameter input unit 11 may include a data interface or may include an input device such as a mouse, a touch sensor, or a keyboard that inputs various types of information according to an operation of the user. The parameters used for calculation of the displacement will be described together with a function of the computing unit 12.

The computing unit 12 calculates the amount of displacement at each measurement point on the measurement target on the basis of the image data which is input from the imaging unit 20 by wire or wireless. The computing unit 12 includes, for example, a control device such as a central processing unit (CPU). The control device may realize its function by executing a process instructed by a predetermined control program.

The computing unit 12 includes a phase computing unit 121, a displacement computing unit 122, a pitch computing unit 123, and a corrective operation unit 124.

The phase computing unit 121 extracts a partial image of the repetitive patterns provided at each measurement point from the image indicated by the input image data. This partial image corresponds to an image of a portion indicating each marker described above. The phase computing unit 121 thins a luminance value of each pixel with predetermined resolution forming each partial image at predetermined thinning-out intervals to generate a thinned-out image. The phase computing unit 121 interpolates the generated thinned-out image and calculates a phase of a moire image with the predetermined resolution. The phase computing unit 121 outputs the calculated phase of the moire image to the displacement computing unit 122 and the pitch computing unit 123. The calculation of the phase of the moire image will be described below.

The displacement computing unit 122 calculates, for each measurement point, a phase difference between a phase of a moire image at an input time input from the phase computing unit 121 and a phase of a moire image at a predetermined reference time. The displacement computing unit 122 calculates the amount of displacement at each measurement point on the basis of the calculated phase difference. The displacement computing unit 122 outputs the calculated displacement to the corrective operation unit 124.

The pitch computing unit 123 calculates, for each measurement point, a pitch of the repetitive patterns on the basis of a gradient of the phase of the moire image input from the phase computing unit 121 and the above-described thinning-out interval. The pitch computing unit 123 outputs the calculated pitch to the corrective operation unit 124.

The corrective operation unit 124 calculates a pitch ratio that is a ratio of the pitch at a predetermined reference measurement point to a pitch at each measurement point input from the pitch computing unit 123 and multiplies the displacement at the reference measurement point input from the displacement computing unit 122 by the calculated pitch ratio to calculate the offset. The corrective operation unit 124 subtracts the calculated offset from the displacement at each measurement point input from the displacement computing unit 122 to calculate the displacement after correction at the measurement point. The corrective operation unit 124 outputs the calculated displacement after correction to the display unit 13.

The display unit 13 displays information indicating the displacement at each measurement point that is input from the corrective operation unit 124. The displacement may be represented in any aspect on the display unit 13. For example, the display unit 13 may represent the displacement at each measurement point as a numerical value, or may represent the displacement as a figure having a length corresponding to the displacement at coordinates on the image corresponding to the measurement point.

(Calculation of phase of moire image)

Next, an example of a method of calculating the phase of the moire image will be described.

The phase computing unit 121 can use a sampling moire method as a scheme of calculating the phase of the moire image. Examples of the sampling moire method include a method of analyzing a displacement distribution based on an arbitrary analysis pitch using a single frequency component, and a method of analyzing a displacement distribution based on arbitrary regular patterns using a plurality of frequency components. The method of analyzing a displacement distribution based on an arbitrary analysis pitch using a single frequency component corresponds to a sampling moire method of the related art, and can be regarded as a special case of the method of analyzing a displacement distribution based on arbitrary regular patterns using a plurality of frequency components. The method of analyzing a displacement distribution based on an arbitrary analysis pitch using a single frequency component can be applied to regular patterns that are repeated at equal intervals in a predetermined direction on the surface of a measurement target. For example, a striped grid of a sine wave or rectangular wave in which a luminance value is repeated in a horizontal direction or a vertical direction at a constant pitch can be used as the regular pattern. The patterns indicated by the markers Mk21 to Mk24 illustrated in Figs. 3 and 4 are a striped grid of a rectangular wave. The analysis pitch corresponds to a thinning-out interval when a thinned-out image is generated. In the following description, an image representing a striped grid may be referred to as a striped grid image. The method of analyzing a displacement distribution based on arbitrary regular patterns using a plurality of frequency components can be applied to regular patterns that are repeated at two or more periods at equal intervals in a predetermined direction on a surface of the measurement target. The regular patterns are used for measurement of the displacement in the predetermined direction. The regular patterns are not limited to a striped grid of a sinusoidal or rectangular wave, and patterns having an arbitrary shape such as characters that are periodically repeated may be applied as the regular patterns.

Next, the method of analyzing a displacement distribution based on an arbitrary analysis pitch using a single frequency component will be described. In the following example, a case in which a direction of repetition is a horizontal direction is illustrated. A luminance distribution f(i, j) of a striped grid image indicated by the image data acquired by the phase computing unit 121 is expressed by Expression (1).

[Math. 1]

$$ f(i,j) = a\cos\left\{2\pi\frac{i}{P} + \phi_0(i,j)\right\} + b = a\cos(\phi(i,j)) + b \quad \cdots (1) $$

In Expression (1), f(i, j) denotes the luminance value at coordinates (i, j). i and j denote coordinate values in the horizontal direction and the vertical direction, respectively. a, b, $\phi_0$, and $\phi$ are an amplitude, background luminance of the striped grid, an initial phase of the striped grid, and a phase of the striped grid, respectively. P is a pitch interval in the image.

In the phase computing unit 121, a predetermined thinning-out interval T is set as a parameter. T is an integer equal to or greater than 2. The unit of T is pixels (number of pixels). T may be equal to or different from P. Here, the phase computing unit 121 generates T thinned-out images for 0 to T-1 which are the thinning-out start points k. The phase computing unit 121 interpolates the luminance values of adjacent pixels after thinning with respect to the T thinned-out images to generate a moire image having luminance values of the respective pixels arranged at the same intervals as before thinning-out. For example, a scheme described in Japanese Patent No. 4831703 can be used as a scheme of generating a thinned-out image and a scheme of generating a moire image. A luminance value $f_M(i, j; k)$ of the generated moire image is expressed by Expression (2).

[Math. 2]

$$ f_M(i,j;k) = a\cos\left\{2\pi\left(\frac{1}{P} - \frac{1}{T}\right)i + \phi_0(i,j) + 2\pi\frac{k}{T}\right\} + b $$

$$ = a\cos\left\{\phi_M(i,j) + 2\pi\frac{k}{T}\right\} + b \quad \cdots (2) $$

The phase computing unit 121 performs a discrete Fourier transform for each of the M moire images to calculate a phase distribution $\phi_M(i, j; \text{co})$ and an amplitude distribution $a_M(i, j; \text{co})$ in a component at an arbitrary frequency $\omega$. The phase distribution $\phi_M(i, j; \text{co})$ is expressed by Expression (3).

[Math. 3]

$$\phi_M(i, j; \omega) = -\arctan \frac{\sum_{k=0}^{T-1} f_M(i, j; k) \sin \omega \left(\frac{2\pi k}{T}\right)}{\sum_{k=0}^{T-1} f_M(i, j; k) \cos \omega \left(\frac{2\pi k}{T}\right)} \qquad \cdots \quad (3)$$

The amplitude distribution $a_M(i, j; \omega)$ is expressed by Expression (4).

[Math. 4]

$$a_M(i, j; \omega) = \frac{2}{T} \sqrt{\left[\sum_{k=0}^{T-1} f_M(i, j; k) \sin \omega \left(\frac{2\pi k}{T}\right)\right]^2 + \left[\sum_{k=0}^{T-1} f_M(i, j; k) \cos \omega \left(\frac{2\pi k}{T}\right)\right]^2} \qquad \cdots \quad (4)$$

The phase computing unit 121 performs the same process on image data captured at another time to calculate the phase distribution $\phi_M(i, j; \omega)$ and the amplitude distribution $a_M(i, j; \omega)$ of the moire image.

The displacement computing unit 122 calculates a phase difference $\Delta\phi_M(i, j; \omega)$ which is a difference between a phase distribution $\phi'_M(i, j; \omega)$ at a certain time and a phase distribution $\phi_M(i, j; \omega)$ at a predetermined reference time. The displacement computing unit 122 calculates a displacement distribution $\Delta x(i, j; \omega)$ on the basis of the phase difference $\Delta\phi_M(i, j; \omega)$ and the pitch p of the pattern as shown in Expression (5).

[Math. 5]

$$\Delta x(i, j; \omega) = -\frac{p}{2\pi \omega} \Delta \phi_M(i, j; \omega) \qquad \cdots \quad (5)$$

In Expression (5), p denotes an actual length of the pitch of the pattern represented in the measurement target. The unit of p is mm, m, or the like. In the displacement computing unit 122, p is set in advance as a parameter that are used for calculation of the displacement. It should be noted that the above-described pitch interval P is a different parameter from p in that P is a pitch (unit: number of pixels) of the pattern on the image. The displacement computing unit 122 combines, among frequencies, multiplication values obtained by multiplying the calculated displacement distribution $\Delta x(i, j; \omega)$ by the amplitude distribution $a_M(i, j; \omega)$ or a weighting factor proportional to a power thereof to calculate a displacement distribution $\Delta x(i, j)$ averaged among the frequencies.

Next, the method of analyzing a displacement distribution based on arbitrary regular patterns using a plurality of frequency components will be described. This method of analyzing a displacement distribution is described in detail in Patent Literature 3. A luminance value g(i, j) of the image of the regular patterns indicated by the image data acquired by the phase computing unit 121 is expressed by Expression (6).

[Math. 6]

$$g(i,j) = \sum_{w=1}^{W} a_w \cos w \left\{ 2\pi \frac{i}{P} + \phi_{w,0}(i,j) \right\} + b = \sum_{w=1}^{W} a_w \cos w(\phi(i,j)) + b$$

$$\cdots (6)$$

In Expression (6), g(i, j) denotes the luminance value at the coordinates (i, j). w, $a_w$, and $\phi_{w,0}$ are an order of a frequency component, an amplitude of a w-th frequency component, and an initial phase of the w-th frequency component, respectively. w is an integer equal to or greater than 1 and equal to or smaller than W. W denotes a maximum order of the frequency component. W may be an integer smaller than P/2 and equal to or greater than 2 according to a sampling theorem. P denotes the pitch (unit: number of pixels) of the regular patterns represented in the image. The maximum order W is preset in the phase computing unit 121.

The phase computing unit 121 thins out the acquired image of the regular patterns in the horizontal direction at thinning-out intervals T to generate a thinned-out image. The phase computing unit 121 generates T thinned-out images for 0 to T-1 which are the thinning-out start points k. The phase computing unit 121 interpolates the luminance values of adjacent pixels after thinning with respect to the T thinned-out images to generate a moire image of which the phase has been shifted, which has luminance values of the respective pixels arranged at the same intervals as that before thinning-out. The luminance value $g_M$(i, j; m) of each moire image is expressed by Expression (7).

[Math. 7]

$$g_M(i,j;m) = \sum_{w=1}^{W} a_w \cos w \left\{ 2\pi \left( \frac{1}{P} - \frac{1}{M} \right) i + \phi_{w,0}(i,j) + 2\pi \frac{m}{M} \right\} + b$$

$$= \sum_{w=1}^{W} a_w \cos w \left\{ \phi_M(i,j) + 2\pi \frac{m}{M} \right\} + b$$

$$\cdots (7)$$

Expression (7) shows that the moire image is represented by a Fourier series of respective frequency components from a low order to a high order. Generating the moire image from an original image is a kind of enlargement phenomenon for patterns represented by the original image. In the moire image, components at a low spatial frequency are mainly represented as regular pattern components. Components at a high spatial frequency are mainly represented as irregular pattern components. A frequency component $g_{w,M}$(i, j; m) of a luminance value $g_M$(i, j; m) of each order is expressed by Expression (8). Accordingly, the frequency component $g_{w,M}$(i, j; m) of W luminance values is calculated.

[Math. 8]

$$g_{w,M}(i,j;m) = a_w \cos w \left\{ \phi_M(i,j) + 2\pi \frac{m}{M} \right\} \quad \cdots (8)$$

The phase computing unit 121 performs a discrete Fourier transform on each of the M moire images to calculate a phase distribution $\phi_M$(i, j; $\omega$) in a component at an arbitrary frequency $\omega$. The phase computing unit 121 applies the frequency component $g_{w,M}$(i, j; m) of the luminance value of each order instead of the luminance value $f_M$(i, j; m) shown in Expression (2) to calculate a phase distribution $\phi_{w,M}$(i, j; w, co). The phase distribution $\phi_{w,M}$(i, j; w, $\omega$) at a certain time and the phase distribution $\phi'_M$(l, j; w, $\omega$) at the reference time are used for the displacement computing unit 122 to calculate a displacement distribution $\Delta$x(i, j; w, co). The displacement computing unit 122 may combine, among the orders and the frequencies, multiplication values obtained by multiplying the calculated displacement distribution $\Delta$x(i, j; w, $\omega$) by the amplitude distribution $a_M$(i, j; w, $\omega$) of respective orders and frequencies or weighting factors proportional to power thereof to calculate a displacement distribution $\Delta$x(i, j) averaged among the orders and the frequencies.

Therefore, in the method of analyzing a displacement distribution based on arbitrary regular patterns using a plurality of frequency components, a phase distribution of the moire image is calculated in consideration of high-order frequency components in addition to a primary (w = 1) frequency component which is a fundamental frequency. Therefore, the arbitrary regular patterns can be used in displacement measurement, and high-accuracy measurement with a small measurement error becomes possible.

It should be noted that the displacement computing unit 122 may determine a displacement of a representative point (for example, a central point) of each marker or an average value of displacements within each marker in the calculated displacement distribution $\Delta x(i, j)$ as the displacement at the measurement point at which each marker has been installed.

Further, although the process in the horizontal direction has been described by way of example, the phase computing unit 121 and the displacement computing unit 122 may perform a process in the vertical direction in which the above-described process in the horizontal direction is applied to the vertical direction or may perform the process in the horizontal direction and the process in the vertical direction together.

(Calculation of pitch)

Next, a scheme of calculating the pitch in the pitch computing unit 123 will be described.

The pitch computing unit 123 calculates a phase gradient $g_x(\phi_M(i, j; \omega))$ in the horizontal direction of the moire image for each frequency component calculated by the phase computing unit 121 using, for example, Expression (9).

[Math. 9]

$$g_x(\phi_M(i, j; \omega)) = \{\phi_M(i+1, j) - \phi_M(i-1, j)\}/2 \qquad \cdots (9)$$

Expression (9) shows dividing of a difference between a phase in a pixel adjacent in a positive direction of the horizontal direction and a phase in a pixel adjacent in a negative direction of the horizontal direction by 2 to calculate the phase gradient $g_x(\phi_M(i, j; \omega))$ in the horizontal direction.

The pitch computing unit 123 calculates the pitch distribution $P_x(i, j; \omega)$ in the horizontal direction expressed in the measurement target on the basis of the calculated phase gradient $g_x(\phi_M(i, j; \omega))$ and the thinning-out interval T, for example, using Expression (10).

[Math. 10]

$$P_x(i, j; \omega) = \frac{2\pi T}{2\pi T + g_x(\phi_M(i, j; \omega))T} \qquad \cdots (10)$$

The pitch computing unit 123 combines multiplication values obtained by multiplying, among frequencies, the pitch distribution $P_x(i, j; \omega)$ for respective frequencies by the amplitude distribution $a_M(i, j; \omega)$ or a weighting factor proportional to a power thereof to calculate a pitch distribution $P_x(i, j)$ averaged among frequencies. It should be noted that when a phase distribution $\phi_M(i, j; w, \omega)$ dependent on an order w is acquired, the pitch computing unit 123 calculates a pitch distribution $P_x(i, j; w, \omega)$ using the phase distribution $\phi_M(i, j; w, \omega)$ instead of the phase distribution $\phi_M(i, J; co)$. The pitch computing unit 123 may combine, among the orders and the frequencies, multiplication values obtained by multiplying the pitch distribution $P_x(i, j; w, \omega)$ by the amplitude distribution $a_M(i, j; w, \omega)$ for each order and frequency or a weighting factor proportional to power thereof, to calculate the pitch distribution $P_x(i, j)$ averaged among the orders and frequencies.

When a moire image in the vertical direction is generated, the pitch computing unit 123 calculates a phase gradient $g_y(\phi_M(i, j; \omega))$ in the vertical direction of the moire image at each frequency component using, for example, Expression (11).

[Math. 11]

$$g_y(\phi_M(i, j; \omega)) = \{\phi_M(i, j+1) - \phi_M(i, j-1)\}/2 \qquad \cdots (11)$$

The pitch computing unit 123 applies the calculated phase gradient $g_y(\phi_M(i, j; \omega))$ instead of the phase gradient $g_x(\phi_M(i, j; \omega))$ to Expression (10) to calculate a pitch interval $P_y(i, j; \omega)$ at each frequency. The pitch computing unit 123 calculates a pitch distribution $P_y(i, j)$ averaged among frequencies on the basis of the pitch interval $P_y(i, j; \omega)$ at each

frequency and the amplitude distribution at each frequency. Further, when the phase distribution $\phi_{w,M}(i, j; w, \omega)$ depending on the order w has been acquired, the pitch computing unit 123 can apply the process in the horizontal direction to the process in the vertical direction and calculate the pitch distribution $P_y(i, j)$ averaged among the orders and frequencies.

It should be noted that the displacement computing unit 122 may determine a pitch at the representative point (for example, the central point) of each marker or an average of pitches within each marker in the calculated pitch distributions $P_x(i, j)$ and $P_y(i, j)$, as pitches $P_x$, $P_y$ at the measurement point at which each marker has been installed.

(Correction of displacement)

Next, a scheme of correcting the displacement on the basis of the pitch at each measurement point in the corrective operation unit 124 will be described. The corrective operation unit 124 calculates a pitch ratio $P_{x,0}/P_x$, which is a ratio of the pitch $P_x,0$ at a predetermined reference measurement point to the pitch $P_x$ at each measurement point. As shown in Expression (12), the corrective operation unit 124 subtracts the offset obtained by multiplying the pitch ratio $P_{x,0}/P_x$ by the displacement $\Delta x_0$ at the reference measurement point from the displacement $\Delta x$ in the horizontal direction at each measurement point to calculate the displacement $\Delta x'$ in the horizontal direction after correction.

[Math. 12]

$$\Delta x' = \Delta x - \frac{P_{x,0}}{P_x}\Delta x_0 \qquad \cdots \ (1\,2)$$

By calculating the offset by multiplying the displacement $\Delta x_0$ at the reference measurement point by the pitch ratio $P_{x,0}/P_x$, a difference in scale on images different according to the distances from the imaging unit 20 to the respective measurement points is compensated.

It should be noted that the corrective operation unit 124 can also correct the displacement $\Delta y$ in the vertical direction at each measurement point using the same scheme. In this case, the corrective operation unit 124 subtracts the offset obtained by multiplying the pitch ratio $P_{y,0}/P_y$ by the displacement $\Delta y0$ at the reference measurement point from the displacement $\Delta y$ in the vertical direction to calculate the displacement $\Delta y'$ in the vertical direction for each correction.

(Displacement measurement process)

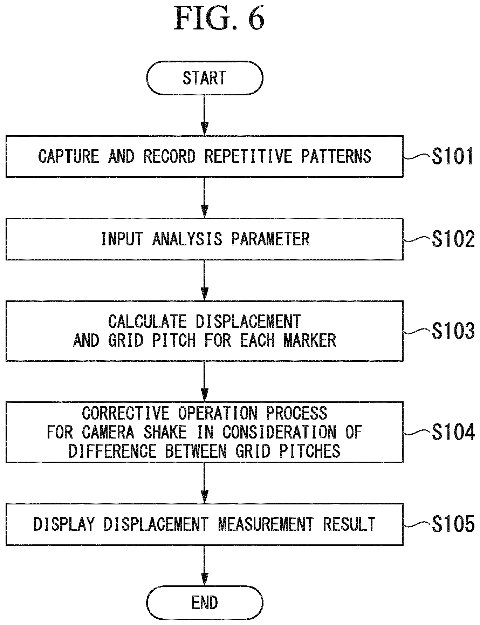

Next, a displacement measurement process according to the first embodiment will be described. Fig. 6 is a flowchart showing the displacement measurement process according to the first embodiment.

(Step S101) The imaging unit 20 captures an image of a measurement target in which a marker representing repetitive patterns repeated at a predetermined pitch is installed at each measurement point, and records image data indicating the captured image. Thereafter, the process proceeds to step S102.

(Step S102) Various parameters to be used for displacement analysis are input to the parameter input unit 11, and the computing unit 12 sets the input parameters. Thereafter, the process proceeds to step S103.

(Step S103) The phase calculation unit 121 thins the luminance value of each pixel representing the repetitive patterns of each marker indicated by the recorded image data at predetermined thinning-out intervals to generate a thinned-out image. The phase calculation unit 121 calculates the phase of the moire image obtained by interpolating each of the generated thinned-out images. The displacement computing unit 122 calculates the displacement for each marker on the basis of the phase difference between the phase at the predetermined reference time and the phase at that time. The pitch computing unit 123 calculates the pitch of the repetitive patterns for each marker on the basis of a phase gradient of the moire image and the thinning-out interval. Thereafter, the process proceeds to step S104.

(Step S104) The corrective operation unit 124 subtracts the offset obtained by multiplying the displacement at a measurement reference point by a ratio of a pitch at the measurement reference point to a pitch at each marker, from the displacement calculated for each marker, to calculate the displacement after correction. Thereafter, the process proceeds to step S105.

(Step S105) The display unit 13 displays the displacement after correction calculated for each marker as a displacement measurement result. Thereafter, the process illustrated in Fig. 6 ends.

(Example 1)

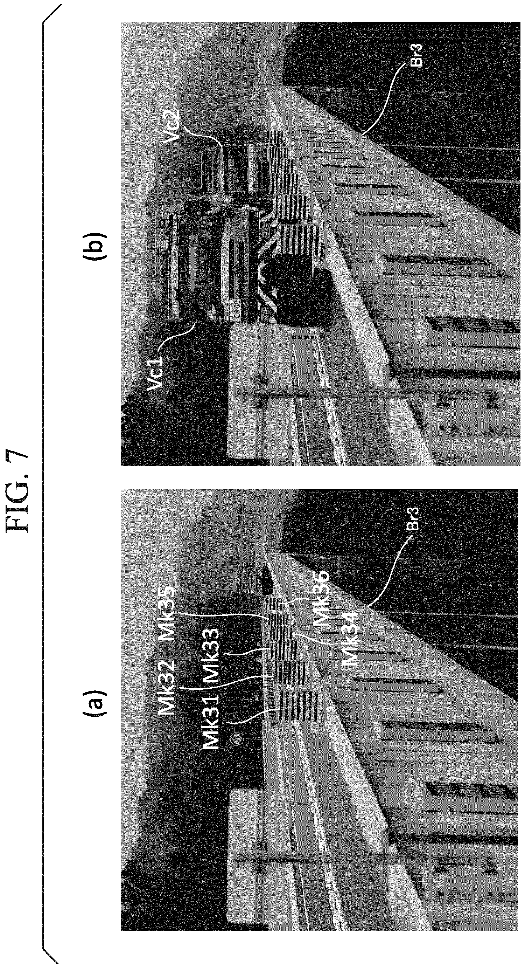

Next, an example of measurement of the displacement of a bridge will be described as example 1 of the first embodiment. Fig. 7 is a view illustrating an example of a captured image according to the first embodiment. In the example illustrated in Fig. 7, six markers Mk31 to Mk36 are installed at regular intervals in a bridge axis direction in a wall handrail of a bridge Br3. The bridge Br3 includes a prestressed reinforced concrete (PRC) box girder bridge and a PRC3 inter-span continuous 2 main girder bridge. In each of the markers Mk31 to Mk36, horizontal stripes are represented as repetitive patterns that are repeated at a predetermined pitch in a vertical direction. A main surface of each of the markers Mk31 to Mk36 is directed in the bridge axis direction. In the first embodiment, the central point of each of the markers Mk31 to Mk36 is set as a measurement point, and the displacement is measured using a captured image before passage of a watering vehicle illustrated in Fig. 7(a) and a captured image during passage of two watering vehicles Vc1 and Vc2 illustrated in Fig. 7(b). The imaging unit 20 has been installed at a height substantially equal to that of the markers Mk31 to Mk36 in a direction closer to the bridge axis than to the side surface of the bridge pier so that all of the markers Mk31 to Mk36 appears.

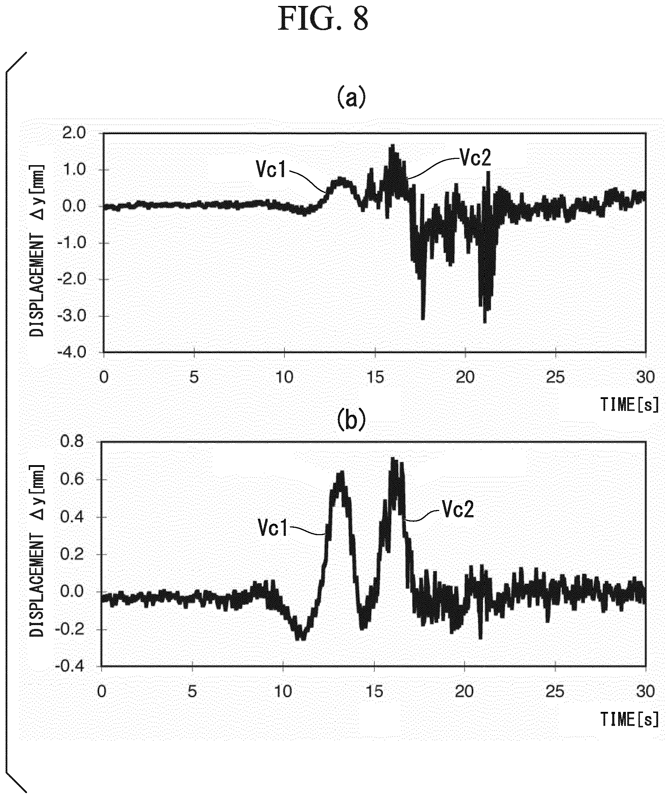

Fig. 8 is a diagram illustrating an example of measurement of the displacement according to the first embodiment. Figs. 8(a) and 8(b) illustrate examples of the displacement at a measurement point set at a center of the bridge Br3 measured using a sampling moire method of the related art and the displacement measurement method according to the first embodiment, respectively. In both cases, a vertical axis and a horizontal axis indicate the displacement and time.

In Figs. 8(a) and 8(b), the displacement $\Delta y$ in a vertical direction increases as the bridge Br3 bends with passage of the watering vehicles Vc1 and Vc2. At times about 13s and 16s, a peak of the displacement $\Delta y$ with the passage of the watering vehicles Vc1 and Vc2 appears. However, in the example illustrated in Fig. 8(a), the displacement $\Delta y$ suddenly increases in an upward direction after passage of the watering vehicle Vc2. This means that the bridge Br3 rises as compared with before passage of the watering vehicle Vc2. Dips of the displacement $\Delta y$ appear at time of about 18s and 21s, and the displacement $\Delta y$ does not converge to 0 before 22s. Such a behavior of the displacement $\Delta y$ is considered to be mainly caused by a change (blurring) in the position or direction of the imaging unit 20 due to reception of the pressure of wind mainly generated immediately after passage of the watering vehicle Vc1. On the other hand, in the example illustrated in Fig. 8(b), a sudden change in the displacement $\Delta y$ after passage of the watering vehicle Vc2 does not appear, and the displacement $\Delta y$ immediately converges to substantially 0. This result shows that an error caused by the change in the position or the direction of the imaging unit 20 is eliminated on the basis of a difference in an observed pitch according to a distance from the imaging unit 20.

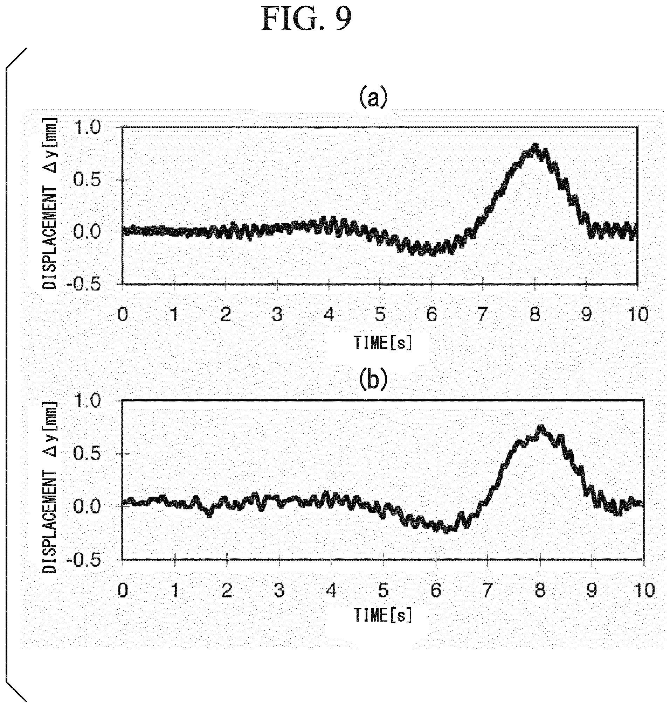

Fig. 9 is a diagram showing another example of the measurement of the displacement according to the first embodiment. The example illustrated in Fig. 9 shows the displacement at a central portion of the bridge Br3 before and after passage of one watering vehicle. Figs. 9(a) and 9(b) show examples of the amounts of displacement at one measurement point measured using a ring type displacement meter and a displacement measurement method according to the first embodiment. Figs. 9(a) and 9(b) show that 0.8 mm and 0.75 mm are obtained as a peak value at a time about 8s, and the displacement converges to substantially 0 after a time of 9s. This result shows that the same measurement accuracy as that of the ring type displacement meter can be obtained using the displacement measurement method according to the first embodiment. Further, in the displacement measurement method according to the first embodiment, practicality is improved over that of the ring type displacement meter in that the amounts of displacement at a plurality of measurement points can be measured at a time using a captured image.

(Example 2)

Next, another example of the measurement of the displacement of the bridge will be described as example 2 of the first embodiment.

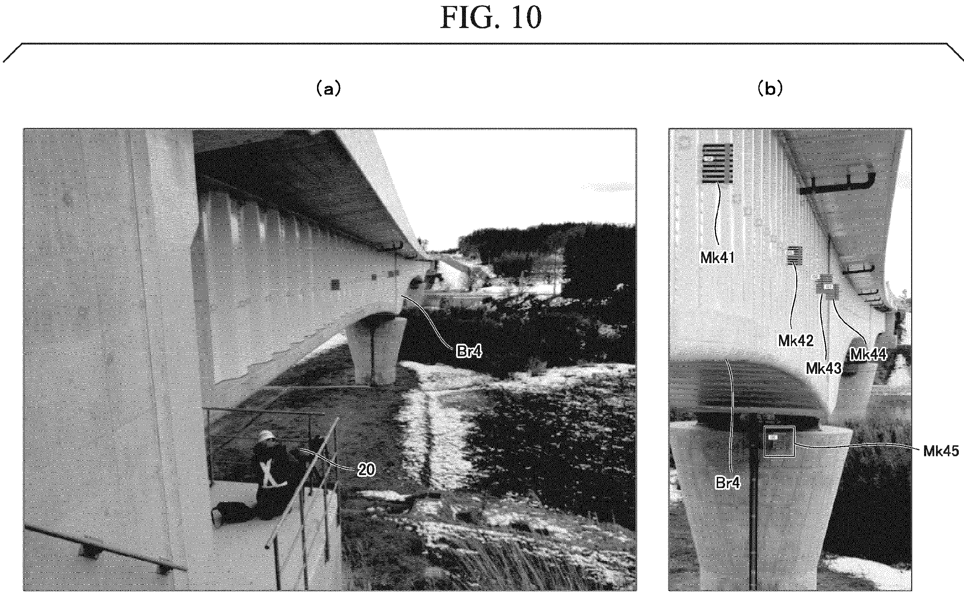

Fig. 10 is a view illustrating an example of installation of the imaging unit 20 and each marker according to example 2 of the first embodiment. Fig. 10(a) illustrates an arrangement of the imaging unit 20. The imaging unit 20 is installed at the top of an abutment.

In addition, an imaging direction of the imaging unit 20 is an upward direction with respect to the horizontal direction, and a direction in a plan view of the imaging direction is parallel to a direction of a bridge axis. Fig. 10(b) illustrates an arrangement of five markers Mk41 to Mk45 installed in the bridge Br4. The markers Mk41 to Mk44 are at the same height and are installed at different positions in a bridge axis direction. The positions of the markers Mk41 to Mk44 are at a 1/4 point, a 1/2 point (center), a 3/4 point, and one point (other end) from one end of one bridge span. The marker Mk45 is installed as a fixed point at a vertex of a bridge pier adjacent to the abutment at which the imaging unit 20 is installed. The marker Mk45 is installed at a height lower than the heights of the other markers Mk41 to Mk44. A central point of the marker Mk45 is used as a reference measurement point. Since vibration of the bridge Br4 is not directly transmitted to the bridge pier at which the marker Mk45 is provided, this reference measurement point is used as a fixed point. With this arrangement, images representing the markers Mk41 to Mk45 are all included in the image captured by the imaging unit 20.

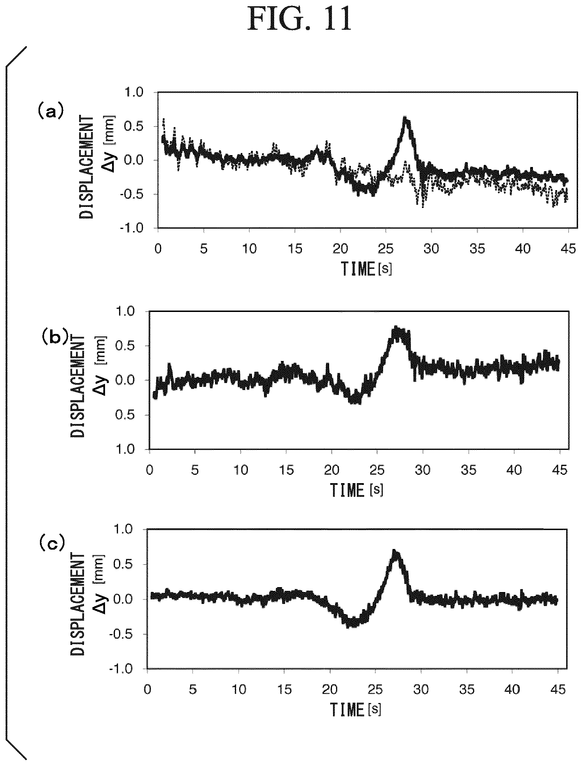

Fig. 11 illustrates the displacement at the marker Mk42 measured before and after one vehicle passes through the bridge Br4 at a driving speed of 60 km per hour in the arrangement illustrated in Fig. 10. The bridge Br4 is a prestressed concrete (PC) 3 inter-span continuous corrugated steel sheet web box girder bridge.

In Fig. 11(a), a bold line indicates the displacement at a central portion of the bridge Br4, and a thin line indicates the displacement at the fixed point. Since vibration of the vehicle is not transmitted to the fixed point, a change in the displacement is mainly caused by a change in a position or an imaging direction of the imaging unit 20 due to the vibration occurring during the measurement. The vehicle passes through the bridge Br4 in a time period including a time from a time of 25s, which is after a time of 23s at which the displacement indicated by the bold line is minimized, to a time of 28s, which is after a time 27s at which the displacement is maximized. Fig. 11(b) illustrates the displacement after correction at the central portion of the bridge Br4 obtained on the basis of the correction method of the related art. This displacement is obtained by simply subtracting the displacement indicated by the thin line from the displacement indicated by the bold line in Fig. 11(a). The displacement is minimized at the time of 23s, and the displacement is maximized at the time of 27s. The minimization of the displacement at the time of 23s is mainly caused by lifting of the bridge pier occurring when the vehicle passes through the adjacent bridge span. The maximization of the displacement at the time of 27s indicates that deflection is maximized when the vehicle passes through a center of the bridge Br4. Therefore, originally, the bridge Br4 returns to an original position and the displacement converges to 0 after a time of 30s that is after the vehicle has passed. However, the displacement does not converge to 0 even after the time of 30s has elapsed. Fig. 11(c) illustrates the displacement after correction at the central portion of the bridge Br4 obtained on the basis of the correction method according to the first embodiment. As the offset, a value obtained by multiplying the displacement at the fixed point by a pitch ratio of the pitch at the fixed point to the pitch at the measurement point is used. The displacement illustrated in Fig. 11(c) converges to substantially 0 before a time of 18s before the vehicle has passed and after a time of 29s after the vehicle has passed. This result shows that even when distances from the imaging unit 20 to the respective measurement points are different, it is possible to eliminate an influence of the change in the position or the imaging direction of the imaging unit 20.

As described above, the displacement measurement device 10 according to the first embodiment includes the phase calculation unit 121 that acquires the image of the two or more repetitive patterns in which the pattern having a constant pitch is spatially repeated and calculates the phase of the moire image obtained by interpolating the thinned-out image generated by thinning out the repetitive patterns at the predetermined thinning-out intervals. The displacement measurement device 10 includes the displacement computing unit 122 that calculates the displacement of the repetitive patterns on the basis of the difference between the phase at a time and the phase at another time. Further, the displacement measurement device 10 includes the corrective operation unit 124 that subtracts the displacement of another repetitive pattern multiplied by the ratio of the pitch of the other repetitive pattern to the pitch of one repetitive pattern from the displacement of the one repetitive pattern.

With this configuration, even when the distances from the imaging unit 20 to the respective measurement points are different, the displacement at the measurement point, where one repetitive pattern is installed, is corrected with reference to the displacement at the measurement point at which another repetitive pattern is installed, on the basis of the pitch of the repetitive patterns installed at each measurement point. Restrictions on installation conditions are relaxed in that it is unnecessary to install the imaging unit 20 at a position at which the distances to respective measurement points can be approximated to be equal in order to measure the amounts of displacement at a plurality of measurement points with high accuracy at a time on the basis of the captured image.

Further, the displacement measurement device 10 further includes the pitch computing unit 123 that calculates the pitch of the repetitive patterns on the basis of the gradient of the phase of the moire image.

With this configuration, it is possible to acquire, from the captured image, pitches of repetitive patterns that are different according to a positional relationship between the imaging unit 20 and the repetitive patterns installed at each measurement point. Therefore, it is unnecessary to acquire and set the pitch at each measurement point using separate means in advance.

(Second embodiment)

Hereinafter, a second embodiment of the present invention will be described with reference to the drawings. The same configurations as those of the above-described embodiment are denoted with the same reference numerals, and description thereof will be omitted.

Fig. 12 is a diagram illustrating an example of an arrangement of a measurement target and an imaging unit 20 in a displacement measurement system 1A according to the second embodiment. In the example illustrated in Fig. 12, the displacement measurement system 1A measures a displacement at a plurality of measurement points of a bridge Br5 that is a measurement target. Markers Mk51 to Mk55 are installed at the respective measurement points. Each marker indicates patterns of horizontal stripes that are repeated at a predetermined pitch in a vertical direction. Further, all of the markers Mk51 to Mk53 are indicated or affixed on a side surface of the bridge Br5. The markers Mk54 and Mk55 are indicated or affixed on a side surface of a bridge pier. The imaging unit 20 is installed on one side of a river bank of the river Rv that is in a direction crossing the side surface of the bridge Br5 and that the bridge Br5 crosses.

The captured image captured by the imaging unit 20 in the arrangement illustrated in Fig. 12 includes partial images representing the five markers Mk51 to Mk55. As illustrated in Fig. 13, since the distance from the imaging unit 20 increases in an order of the markers Mk51, Mk54, Mk52, Mk53, and Mk55, an area or a pitch of the markers become smaller in an order of the markers Mk51, Mk54, Mk52, Mk53, and Mk55. In addition, since the side surface of the bridge Br5 is in an oblique direction which is not orthogonal to the imaging direction of the imaging unit 20, widths in a vertical direction of the markers Mk51 to Mk55 represented in the captured image are not constant. In the example illustrated in Fig. 13, the width is widened to the right. Therefore, a shape of the marker Mk51 to Mk55 represented in the captured image is trapezoidal. Particularly, when an image is captured in an oblique direction with respect to a surface of a subject using a wide angle lens, an influence thereof is more remarkable. Further, the markers Mk54 and Mk55 are installed on the side surfaces of the bridge piers at measurement points lower than the markers Mk51 to Mk53. Vibration caused by traveling of the inspection vehicle Vc at the bridge Br5 are not directly transmitted to the markers Mk54 and Mk55. Therefore, a representative point of one or both of the markers Mk54 and Mk55 is used as the reference measurement point.

(Displacement measurement device)

Next, a configuration of a displacement measurement system 1A according to the second embodiment will be described.

Fig. 14 is a block diagram illustrating a functional configuration of the displacement measurement system 1A according to the second embodiment. The displacement measurement system 1A includes a displacement measurement device 10A and an imaging unit 20.

The displacement measurement device 10A includes a parameter input unit 11, a computing unit 12A, and a display unit 13.

The computing unit 12A calculates the displacement at each measurement point on a measurement target on the basis of image data input from the imaging unit 20 in a wired manner or wirelessly. The computing unit 12A includes, for example, a control device such as a central processing unit (CPU). The control device may realize its function by executing a process instructed by a predetermined control program. The computing unit 12A includes a phase calculation unit 121, a displacement computing unit 122, a projective transformation unit 125, an interpolation processing unit 126, and a corrective operation unit 127.

The projective transformation unit 125 performs projective transformation of an image indicated by the image data input from the imaging unit 20. The projective transformation unit 125 outputs coordinates obtained by the projective transformation for respective predetermined coordinates constituting the image and transformed image data indicating the luminance value for respective_coordinates after transformation to the interpolation processing unit 126.

Respective coordinates before transformation are arranged on a two-dimensional plane at predetermined intervals (pixel pitch) in each of the horizontal direction and the vertical direction. The projective transformation is a transformation to a corresponding point which is the coordinates $(I, J)$ of the captured image obtained in a front view from the coordinates $(i, j)$ of the captured image obtained in an oblique view. Details of the projective transformation will be described below.

The interpolation processing unit 126 linearly interpolates the luminance values of the respective transformed coordinates indicated by the transformed image data input from the projective transformation unit 125 to calculate luminance values for the respective predetermined coordinates. An arrangement of the predetermined coordinates may be the same as an arrangement of the coordinates before transformation. As a linear interpolation scheme, a known interpolation method such as a bilinear method or a bicubic method can be used. According to the projective transformation, a density of pixels is biased, but luminance values of the pixels uniformly distributed due to the interpolation are obtained. The interpolation processing unit 126 outputs interpolation image data indicating the calculated luminance values of the respective coordinates to the phase calculation unit 121. The phase calculation unit 121 calculates a phase distribution of the moire image on the basis of the image indicated by the interpolation image data instead of the image indicated by the image data input from the imaging unit 20.

The corrective operation unit 127 subtracts the displacement $\Delta x_0$ at a predetermined measurement reference point from the displacement $\Delta x$ at each measurement point input from the displacement computing unit 122 to calculate the displacement $\Delta x'$ after correction at the measurement point. The corrective operation unit 127 outputs the calculated displacement after correction to the display unit 13. That is, in the second embodiment, the corrective operation unit 127 is different from that in the first embodiment in that the displacement at the predetermined measurement reference point is not multiplied by the pitch ratio. The displacement measurement device 10A according to the second embodiment may also perform the process in the vertical direction instead of or together with the process in the horizontal direction.

(Projective transformation)

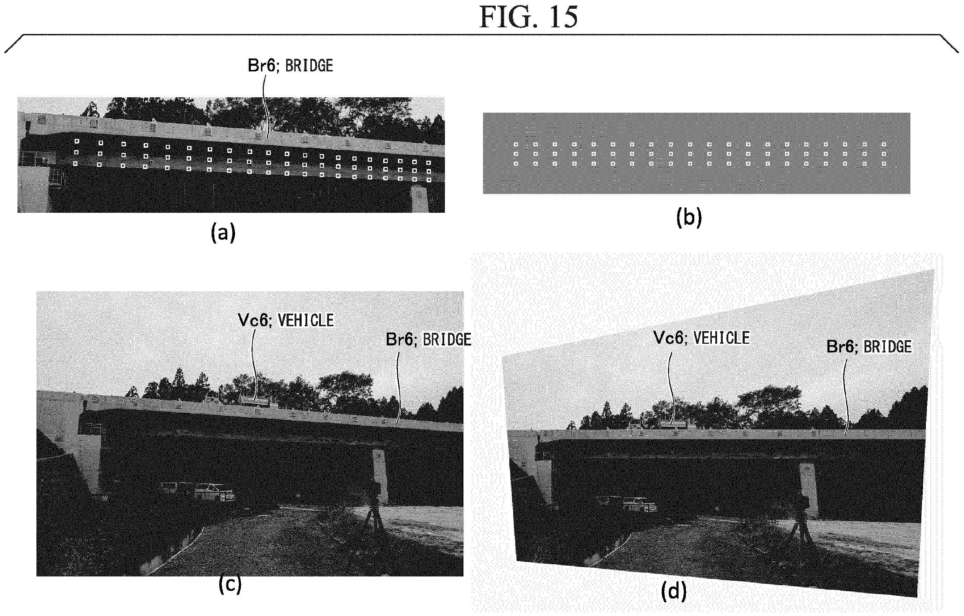

Next, a projective transformation process that is performed by the projective transformation unit 125 will be described. Fig. 15 is a view illustrating an example of the projective transformation. A relationship between coordinates (i, j) before the transformation and coordinates (I, J) of a corresponding point reflected by the projective transformation before the projective transformation is performed is shown in Expression (13).

[Math. 13]

$$ I = \frac{a_1 i + a_2 j + a_3}{a_7 i + a_8 j + 1}, J = \frac{a_4 i + a_5 j + a_6}{a_7 i + a_8 j + 1} \quad \cdots (13) $$

In Expression (13), $a_1$, $a_2$, ..., $a_8$ are projective transformation parameters. The projective transformation parameters $a_1$, $a_2$, ..., $a_8$ can be calculated when there is a relationship between coordinates (i, j) at four or more points before transformation and coordinates (I, J) at corresponding points. In addition, as the number of sets of coordinates before transformation and the corresponding points becomes larger, it is possible to obtain a projective transformation matrix capable of realizing more stable high-precision projective transformation. Therefore, sets of coordinates at the four or more points before transformation and coordinates of the corresponding points corresponding thereto are set as the parameters in the projective transformation unit 125. Fig. 15(a) shows an example of coordinates before transformation. The coordinates before transformation are coordinates of the intersections of joints surrounded by square marks in the captured image. The joints are represented by linear portions of which luminance values suddenly decrease, respectively. The projective transformation unit 125 can determine coordinates of a portion in which a gradient of the luminance value in directions crossing each other is larger than a predetermined gradient, as coordinates before transformation of a transformation target. In the side surface of the bridge Br6, since the joints are arranged in a grid shape, it is convenient when the coordinates of corresponding points given after transformation are determined. In the example illustrated in Fig. 15(a), coordinates of a total of 60 intersections including 20 intersections in the horizontal direction and 3 intersections in the vertical direction on the side surface of the bridge Br6 are selected as coordinates before transformation.

Fig. 15(b) illustrates an example of an arrangement of the coordinates of the corresponding points after transformation. The corresponding points after transformation are arranged on respective grid points of an orthogonal grid consisting of straight lines orthogonal to each other. Coordinates of the respective grid points correspond to coordinates of corresponding points distributed at equal intervals in a horizontal direction and a vertical direction. In this example, the fact that a shape of an infrastructure object such as a bridge or a building that is a subject is a rectangular parallelepiped or that feature points appearing on a surface of a subject are repeated at fixed spatial periods is used. That is, in general projective transformation, two images before and after transformation are necessary, whereas the embodiment is characterized in that the projective transformation is performed using only one image before transformation.

The projective transformation unit 125 calculates the projective transformation parameters $a_1$, $a_2$, ..., as using a least squares method as shown in Expression (14) by using a set of coordinates before transformation and coordinates of a corresponding point as a parameter.

[Math. 14]

$$ \{a\} = \left( [A]^T [A] \right)^{-1} [A]^T \{X\} \quad \cdots (14) $$

In Expression (14), a vector $\{a\}$ is $[a_1, a_2, a_3, a_4, a_5, a_6, a_7, \text{ and } a_8]^T$. T denotes a vector or a transpose of a matrix. $([A]^T[A])^{-1}$ is expressed by Expression (15). Further, $[A]^T\{X\}$ is expressed by Expression (16).

[Math. 15]

$$\left([A]^T[A]\right)^{-1} = \begin{pmatrix} \sum i^2 & \sum i\cdot j & \sum i & 0 & 0 & 0 & -\sum I\cdot i^2 & -\sum I\cdot i\cdot j \\ \sum i\cdot j & \sum j^2 & \sum j & 0 & 0 & 0 & -\sum I\cdot i\cdot j & -\sum I\cdot j^2 \\ \sum i & \sum j & \sum 1 & 0 & 0 & 0 & -\sum I\cdot i & -\sum I\cdot j \\ 0 & 0 & 0 & \sum i^2 & \sum i\cdot j & \sum i & -\sum J\cdot i^2 & -\sum J\cdot i\cdot j \\ 0 & 0 & 0 & \sum i\cdot j & \sum j^2 & \sum j & -\sum J\cdot i\cdot j & -\sum J\cdot j^2 \\ 0 & 0 & 0 & \sum i & \sum j & \sum 1 & -\sum J\cdot i & -\sum J\cdot j \\ -\sum I\cdot i^2 & -\sum I\cdot i\cdot j & -\sum I\cdot i & -\sum J\cdot i^2 & -\sum J\cdot i\cdot j & -\sum J\cdot i & \sum I^2\cdot i^2 + J^2\cdot i^2 & \sum I^2\cdot ij + J^2\cdot ij \\ -\sum I\cdot i\cdot j & -\sum I\cdot j^2 & -\sum I\cdot j & -\sum J\cdot i\cdot j & -\sum J\cdot j^2 & -\sum J\cdot j & \sum I^2\cdot ij + J^2\cdot ij & \sum I^2\cdot j^2 + J^2\cdot j^2 \end{pmatrix}$$

$$\cdots (15)$$

[Math. 16]

$$[A]^T\{X\} = \left[\sum I\cdot i \quad \sum I\cdot j \quad \sum I \quad \sum J\cdot i \quad \sum J\cdot j \quad \sum J \quad \sum -I^2\cdot i - J^2\cdot i \quad \sum -I^2\cdot j - J^2\cdot j\right]^T$$

$$\cdots (16)$$

In Expressions (15) and (16), $\Sigma$ denotes a sum between sets of coordinates (i, j) before transformation and coordinates (I, J) of the corresponding point.

Expressions (14) to (16) are obtained on the basis of Expression (17) obtained by expanding Expression (13).

[Math. 17]

$$I = a_1 i + a_2 j + a_3 - a_7 i\cdot I - a_8 j\cdot I, \quad J = a_4 i + a_5 j + a_6 - a_7 i\cdot J - a_8 j\cdot J$$

$$\cdots (17)$$

Expression (18) is obtained by expressing Expression (17) in a matrix through parallelization between the sets.

[Math. 18]

$$\{X\} = [A]\{a\} \quad \cdots (18)$$

The vector {X} shown in Expression (18) is obtained by parallelizing [I, J, ...]$^T$ and I and J at the left side of Expression (17) between the sets. As shown in Expression (19), the matrix [A] is obtained by parallelizing coefficients by which the projective transformation parameters on the right side of Expression (18) are multiplied, between sets.

[Math. 19]

$$\begin{bmatrix} i & j & 1 & 0 & 0 & 0 & -i\cdot I & -j\cdot I \\ 0 & 0 & 0 & i & j & 1 & -i\cdot J & -j\cdot J \\ & & & \vdots & & & & \end{bmatrix} \quad \cdots (19)$$

The projective transformation unit 125 applies the calculated projective transformation parameters ai to as to Expression (13) to calculate the coordinates (I, J) after transformation with respect to each of the coordinates (i, j) constituting the image data using the relationship shown in Expression (13).

Usually, an image to be used for calculation of the projective transformation parameters $a_1$, $a_2$, ..., as is captured

at a time different from a time at which an image that is a projective transformation target is captured. When a positional relationship between the imaging unit 20 and the measurement target does not change, the projective transformation unit 125 may calculate the projective transformation parameters $a_1$, $a_2$, ..., as to generate a transformation table indicating a relationship between each of the coordinates (i, j) constituting the image data and the coordinates (I, J) of the corresponding point after transformation in advance. In this case, the projective transformation unit 125 determines the coordinates (I, J) of the corresponding point with reference to the transformation table corresponding to each of the coordinates (i, j) constituting the image data.

Fig. 15(c) illustrates an example of a captured image that is a projective transformation target. Fig. 15(d) illustrates an image after transformation obtained by performing projective transformation on a captured image illustrated in Fig. 15(c). In an example illustrated in Fig. 15(c), a side surface of the bridge Br6 is shown in an oblique direction intersecting both a horizontal direction and a vertical direction, and a width of the side surface becomes narrower toward the right side. On the other hand, in an example illustrated in Fig. 15(d), a left end is enlarged and a right end is reduced in the image after transformation as compared with the image before transformation by performing appropriate projective transformation. As a result, a longitudinal direction of the side surface of the bridge Br6 is arranged in the horizontal direction, and a width of the side surface is substantially constant. Accordingly, the displacement can be measured with high accuracy using the same analysis parameter at each measurement point.

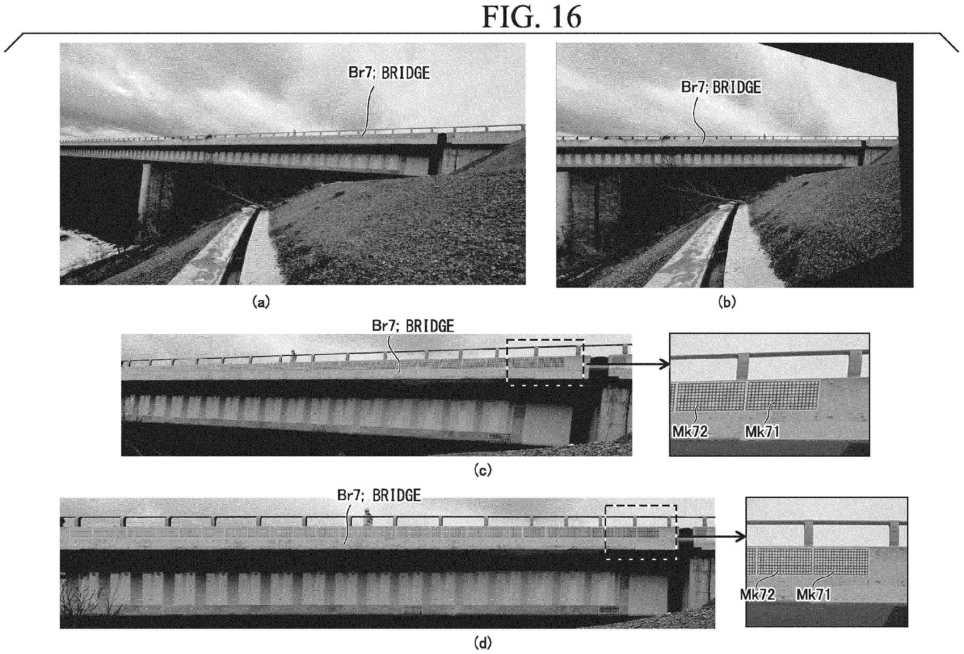

Fig. 16 is a view illustrating another example of the projective transformation. Fig. 16(a) illustrates another example of the captured image which is a projective transformation target. Fig. 16(b) illustrates an image after transformation obtained by performing the projective transformation on the captured image illustrated in Fig. 16(a). In an example illustrated in Fig. 16(a), a handrail portion of a bridge Br7 is shown in an oblique direction, and a width of the handrail portion is widened toward the right side. On the other hand, in the example illustrated in Fig. 16(b), a longitudinal direction of the handrail portion of the bridge Br7 is shown in the horizontal direction, and the width of the handrail portion is substantially constant. Fig. 16(c) illustrates an enlarged view of a right end portion of the handrail portion illustrated in Fig. 16(a). In this enlarged view, for example, markers Mk71 and Mk72 indicating regular grid patterns with constant pitches in the horizontal direction and the vertical direction in the handrail portion are shown. In the example illustrated in Fig. 16(c), the markers Mk71 and Mk72 originally having a rectangular shape are obliquely shown in the enlarged view. Fig. 16(d) illustrates an enlarged view of the right end portion of the handrail portion illustrated in Fig. 16(b). In the example illustrated in Fig. 16(d), a shape of the markers Mk71 and Mk72 is corrected to be in a rectangular shape, and the patterns indicated by the markers Mk71 and Mk72 becomes orthogonal grids. Thus, it is possible to obtain an image representing a plurality of measurement points having the same distance in the depth direction from the imaging unit 20 through the projective transformation. The periods of the patterns of the markers installed respectively at the plurality of measurement points represented in the obtained image are equal to each other.

(Displacement measurement process)

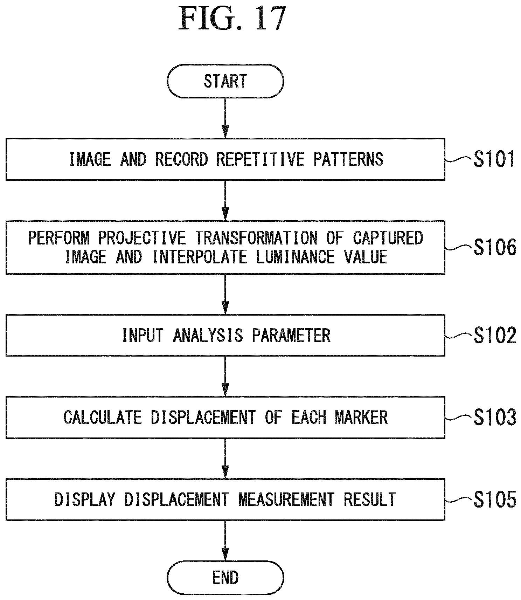

Next, the displacement measurement process according to the second embodiment will be described. Fig. 17 is a flowchart showing the displacement measurement process according to the second embodiment. The process illustrated in Fig. 17 includes steps S101, S106, S102, S103, and S105. In the process illustrated in Fig. 17, after step S101, the process proceeds to step S106.

(Step S106) The projective transformation unit 125 performs projective transformation of the image indicated by the recorded image data. The interpolation processing unit 126 linearly interpolates the luminance value at each of coordinates after transformation obtained through projective transformation to calculate a luminance value at each of predetermined coordinates. Thereafter, the processes of steps S102, S103, and S105 are performed.

However, in the second embodiment, in step S103, the phase calculation unit 121 generates a thinned-out image on the basis of the luminance value for each of the coordinates obtained in the interpolation processing unit 126. In addition, since the displacement measurement device 10A does not include the pitch computing unit 123 as illustrated in Fig. 14, a process of calculating the pitch of the repetitive patterns is omitted in step S103. Further, after a process of step S103, the corrective operation unit 127 calculates the displacement after correction by subtracting the displacement at the predetermined measurement reference point from the displacement at each measurement point. Thereafter, the process proceeds to step S105.

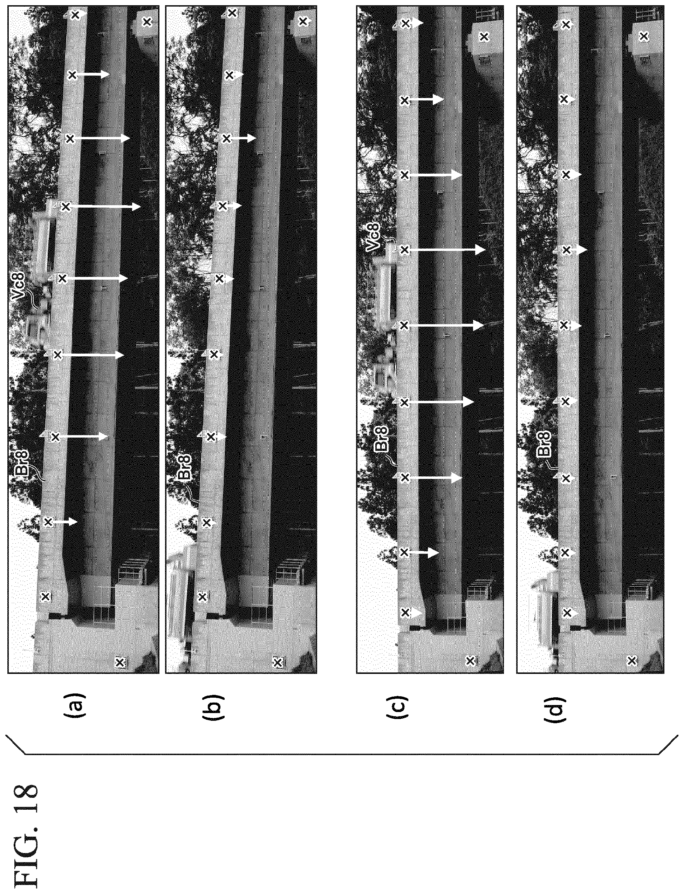

Fig. 18 is a view illustrating an example of measurement of a displacement at each measurement point. In the example illustrated in Fig. 18, eleven measurement points are set on a side surface of a bridge Br8. The measurement points are represented by crosses. A marker indicating a grid pattern is installed at each measurement point. Nine measurement points of the eleven measurement points are installed at regular intervals in a longitudinal direction of the bridge Br9. In addition, the measurement points are set on a side surface of an abutment and a side surface of a bridge pier. The measurement point set on a side surface of the abutment is used as a reference measurement point. A length of an arrow with each measurement point as a starting point indicates the displacement in a vertical direction.

Figs. 18(a) and 18(c) are images captured at the time of passage of a vehicle Vc8. Fig. 18(a) illustrates an image not subjected to projective transformation and the displacement measured on the basis of the image. Fig. 18(c) illustrates an image after transformation subjected to the projective transformation and the displacement measured on the basis of the image. In both of Figs. 18(a) and 18(c), a tendency of the displacement larger in a central portion than in the both ends of the bridge Br8 is shown. However, a portion in which the displacement is largest is closer to the central portion of the bridge Br8 in Fig. 18(c) than in Fig. 18(a), and is biased to a position closer to the bridge pier than the central portion in Fig. 18(a).

Figs. 18(b) and 18(d) are images captured when the vehicle Vc8 does not pass. Fig. 18(b) illustrates an image not subjected to the projective transformation and the displacement measured on the basis of the image. Fig. 18(d) illustrates an image after transformation subjected to the projective transformation and the displacement measured on the basis of the image. In both of Figs. 18(b) and 18(d), the displacement approximates to 0, but the displacement illustrated in Fig. 18(d) is smaller than the displacement in Fig. 18(b) at all measurement points. In particular, the displacement at a measurement point arranged at a third position to the left from directly above the bridge pier illustrated in Fig. 18(b) is largest, but the displacement at that measurement point illustrated in Fig. 18(d) is about 1/4. Since the distances in the depth direction from the imaging unit 20 to the coordinates of the respective measurement points after transformation are equal by the projective transformation, the pitches of the patterns on the markers shown on the respective measurement points become equal. The measurement result illustrated in Fig. 18 shows that the measurement error of the displacement due to the difference in pitch according to the distance from the imaging unit 20 to the respective measurement points is eliminated.

As described above, the displacement measurement device 10A according to the second embodiment includes the projective transformation unit 125 that acquires an image representing two or more repetitive patterns in which a pattern having a constant pitch is spatially repeated and performs projective transformation of the obtained image. The displacement measurement device 10A includes the phase calculation unit 121 that calculates the phase of the moire image obtained by interpolating the thinned-out images generated by thinning out the repetitive patterns at predetermined thinning-out intervals. Further, the displacement measurement device 10A includes the displacement computing unit 122 that calculates the displacement in the repetitive patterns on the basis of a difference between a phase at a time and a phase at another time. The displacement measurement device 10A includes the corrective operation unit 127 that subtracts the displacement at another repetitive pattern from the displacement at one repetitive pattern.

With this configuration, even when the distance from the imaging unit 20 to the respective measurement points are different, the pitches of the repetitive patterns installed at the respective measurement points represented in the captured image become equal. There is an error in the displacement at the measurement point, where one repetitive pattern has been installed, which has been corrected with reference to the displacement at the measurement point at which another repetitive pattern has been installed, due to the difference in the pitch represented in the image in the related art, but this error is eliminated. Therefore, restrictions on installation conditions are relaxed in that it is unnecessary to install the imaging unit 20 at a position at which the distances to respective measurement points can be approximated to be equal in order to measure the amounts of displacement at a plurality of measurement points with high accuracy at a time on the basis of the captured image. In addition, in a method of the related art, displacement has been analyzed with a different analysis parameter for each marker installed at each measurement point, whereas in the second embodiment, the displacement can be analyzed with one analysis parameter. Therefore, an analysis time is greatly shortened, and work related to a setting of the analysis parameter is reduced.

The displacement measurement system 1 or 1A according to the embodiments described above may be modified and implemented as follows. The imaging unit 20 and the displacement measurement devices 10 or 10A may be connected by a wired or wireless network. Image data that is a processing target may be input to the displacement measurement device 10 or 10A via another device other than the imaging unit 20. The displacement measurement device 10 or 10A may be configured as a single device integrated with the imaging unit 20.

The displacement measurement device 10 or 10A does not necessarily have to be integrated with the parameter input unit 11 and the display unit 13. In the displacement measurement device 10 or 10A, one or both of the parameter input unit 11 and the display unit 13 may be omitted.

Further, the displacement measurement device 10 according to the first embodiment may also acquire image data acquired by a plurality of imaging units 20 as image data representing partial images representing a plurality of repetitive patterns at each time. For example, in the displacement measurement system 1, two imaging units 20 may be used, one imaging unit 20 may capture images representing the markers Mk21 and Mk22 illustrated in Fig. 3 as some markers, and the other imaging unit 20 may capture images representing the markers Mk23 and Mk24 as some other markers. In this case, the phase calculation unit 121 may calculate a phase of a moire image related to all of the markers Mk21 to Mk24 captured at the same time.

In the above-described embodiment, the case in which the phase calculation unit 121 and the interpolation processing unit 126 use the luminance value as a signal value of each pixel has been described by way of example, but the present invention is not limited thereto. The phase calculation unit 121 and the interpolation processing unit 126 may use a color signal value, such as a signal value of each color such as red, green, or blue, or a set of the signal values, as the signal value of each pixel.

In addition, although the case in which the pitch computing unit 123 calculates the pitch of the repetitive patterns on the basis of the phase gradient of the moire image has been described by way of example, the present invention is not limited thereto. For example, the pitch computing unit 123 may calculate autocorrelation on the basis of the luminance value of each pixel of the moire image and the luminance value of each pixel of the moire image displaced in a predetermined direction, and determine the displacement at which the autocorrelation is maximized, to be the pitch. Further, the pitch computing unit 123 may determine a wavelength corresponding to a spatial frequency at which power at each spatial frequency obtained by performing, among pixels, Fourier transformation on the luminance value of each pixel of the moire image is maximized, to be the pitch.

Further, although it is assumed that the pitch of the pattern represented by the marker installed at each measurement point is the same among the markers in the above-described embodiment, the pitch may be different at each marker. For example, the measurement point that is farther from the imaging unit 20 may have a larger pitch. In this case, even when the distance from the imaging unit 20 increases, a period of the patterns shown on the image does not become small, and therefore, it is possible to prevent or alleviate deterioration in measurement accuracy according to the distance from the imaging unit 20.

In this case, the corrective operation unit 124 calculates the displacement $\Delta x'$ in the horizontal direction after correction by subtracting the offset obtained by multiplying a normalized pitch ratio $P_{x,0} \cdot P_x'/P_x \cdot P_{x,0}'$ by the displacement $\Delta x_0$ at the reference measurement point from the displacement $\Delta x$ in the horizontal direction at each measurement point. The normalized pitch ratio is calculated by dividing the pitch ratio $P_{x,0}/P_x$ shown in Expression (12) by a ratio $P_{x,0}'/P_x'$ of the pitch $P_x'$ of the pattern represented at each measurement point on the subject to the pitch $P_{x,0}'$ of the pattern represented by a reference observation point on the object. The pitch $P_{x,0}'$ of the pattern represented at the reference observation point and the pitch $P_x'$ of the pattern represented at each measurement point may be set in the corrective operation unit 124 in advance. Accordingly, a difference in pitch of the patterns represented on the subject among measurements is compensated.

Further, the displacement at each measurement point output from the corrective operation unit 124 or 127 may be only the displacement at a certain time based on an image captured at the time or may be a temporal sequence of the amounts of displacement at respective times based on sequentially captured images. The temporal sequence of the amounts of displacement represents the vibration at each observation point.

It should be noted that some of the units, such as the computing unit 12 or the computing unit 12A, of the displacement measurement device 10 or 10A in the embodiments described above may be realized by a computer. In this case, the units may be realized by recording a program for realizing a control function on a computer-readable recording medium, loading the program recorded on the recording medium into a computer system, and executing the program. Here, the "computer system" is a computer system built into the displacement measurement device 10 or 10A, which includes an OS or hardware such as a peripheral device. Further, the "computer-readable recording medium" refers to a portable medium such as a flexible disk, a magneto-optical disc, a ROM, or a CD-ROM, or a storage device such as a hard disk built into the computer system. Further, the "computer-readable recording medium" may also include a recording medium that dynamically holds a program for a short period of time, such as a communication line when the program is transmitted over a network such as the Internet or a communication line such as a telephone line or a recording medium that holds a program for a certain period of time, such as a volatile memory inside a computer system including a server and a client in such a case. Further, the program may be a program for realizing some of the above-described functions or may be a program capable of realizing the above-described functions in a combination with a program previously stored in the computer system.

Further, some or all of the units of the displacement measurement device 10 or 10A in the above-described embodiment may be realized as an integrated circuit such as a large scale integration (LSI). Each functional block of the displacement measurement device 10 or the displacement measurement device 10A may be individually realized as a processor, or some or all thereof may be integrated and realized as a processor. Further, an integrated circuit realization scheme is not limited to the LSI and the units may be realized as a dedicated circuit or a general-purpose processor. Further, in a case in which an integrated circuit realization technology with which the LSI is replaced appears with the advance of a semiconductor technology, an integrated circuit according to the technology may be used.

Although the embodiments of the present invention have been described in detail with reference to the drawings, specific configurations are not limited to those described above, since the full scope of the present invention is only limited by the appended claims.

[Reference Signs List]

    1, 1A Displacement measurement system

10, 10A Displacement measurement device
11 Parameter input unit
12, 12A Computing unit
121 Phase computing unit
122 Displacement computing unit
123 Pitch computing unit
124, 127 Corrective operation unit
125 Projective transformation unit
126 Interpolation processing unit
13 Display unit
20 Imaging unit

**Claims**

1. A displacement measurement device (10) for measuring a displacement of an object,
   the displacement measuring device comprising:

   a phase computing unit (121) that is configured to acquire an image with two or more repetitive patterns spatially repeated at a constant pitch, to thin out the repetitive patterns at a predetermined thinned-out interval to generate a thinned-out image, and to compute a phase of a moire image obtained by interpolating the thinned-out image; and
   a displacement computing unit (122) that is configured to compute a displacement of the repetitive patterns based on a difference between the phase at a time and the phase at another time; **characterized by** comprising a corrective operation unit (124) that is configured to subtract an offset from the displacement of one repetitive pattern of the repetitive patterns, the offset being a product of the displacement of another repetitive pattern of the repetitive patterns by a pitch ratio of a pitch of the another repetitive pattern to a pitch of the one repetitive pattern.

2. The displacement measurement device (10) according to claim 1, further comprising a pitch computing unit (123) that is configured to compute the pitch of the repetitive patterns based on a gradient of the phase.

3. The displacement measurement device (10) according to claim 1 or 2, wherein the corrective operation unit (124) is configured to compute the offset by multiplying the displacement of the another repetitive pattern by a normalized pitch ratio, the normalized pitch ratio being a quotient of the pitch ratio of the pitch of the another repetitive pattern to the pitch of the one repetitive pattern by a second pitch ratio of the pitch of the another repetitive pattern represented on a subject to the pitch of the one repetitive pattern represented on the subject.

4. A displacement measurement device (10A) for measuring a displacement of an object,
   the displacement measuring device comprising:

   a projective transformation unit (125) that is configured to acquire an image with two or more repetitive patterns spatially repeated at a constant pitch and to perform projective transformation of the image;
   a phase computing unit (121) that is configured to thin out the repetitive patterns at a predetermined thinned-out interval to generate a thinned-out image, and to compute a phase of a moire image obtained by interpolating the thinned-out images;
   a displacement computing unit (122) that is configured to compute a displacement in the repetitive patterns based on a difference between the phase at a time and the phase at another time; and
   a corrective operation unit (127) that is configured to subtract an offset from the displacement of one repetitive pattern of the repetitive patterns, the offset being the displacement of another repetitive pattern of the repetitive patterns.

5. A displacement measurement method for measuring a displacement of an object,
   the displacement measuring method comprising:

   an image acquisition step of acquiring an image with two or more repetitive patterns spatially repeated at a constant pitch;
   a phase calculation step of thinning out the repetitive patterns at a predetermined thinned-out interval to generate a thinned-out image and computing a phase of a moire image obtained by interpolating the thinned-out image; and a displacement computing step of calculating a displacement of the repetitive patterns based on a difference between the phase a time and the phase at another time;

**characterized by** comprising
a corrective operation step of subtracting an offset from the displacement of one repetitive pattern of the repetitive patterns, the offset being a product of the displacement of another repetitive pattern of the repetitive patterns by a pitch ratio of a pitch of the another repetitive pattern to a pitch of the one repetitive pattern.

6. A displacement measurement method for measuring a displacement of an object,
the displacement measuring method comprising:

   a projective transformation step of acquiring an image with two or more repetitive patterns spatially repeated at a constant pitch and performing a projective transformation of the image;
   a phase computing step of thinning out the repetitive patterns at a predetermined thinned-out interval to generate a thinned-out image, and computing a phase of a moire image obtained by interpolating the thinned-out images;
   a displacement computing step of computing a displacement in the repetitive patterns based on a difference between the phase at a time and the phase at another time; and
   a corrective operation step of subtracting an offset from the displacement of one repetitive pattern of the repetitive patterns, the offset being the displacement of another repetitive pattern of the repetitive patterns.

7. A computer program comprising instructions which, when the program is executed by a computer, cause the computer to carry out the method of claim 5 or of claim 6.

## Patentansprüche

1. Verschiebungsmessvorrichtung (10) zum Messen einer Verschiebung eines Objekts, wobei die Verschiebungsmessvorrichtung umfasst:

   eine Phasenberechnungseinheit (121), die dazu konfiguriert ist, ein Bild mit zwei oder mehr wiederkehrenden Mustern zu erfassen, die sich räumlich in einem konstanten Abstand wiederholen, um die wiederkehrenden Muster in einem vorgegebenen ausgedünnten Intervall auszudünnen, um ein ausgedünntes Bild zu erzeugen, und eine Phase eines Moire-Bildes zu berechnen, das durch Interpolieren des ausgedünnten Bildes erhalten wird; und
   eine Verschiebungsberechnungseinheit (122), die dazu konfiguriert ist, eine Verschiebung der wiederkehrenden Muster basierend auf einer Differenz zwischen der Phase zu einer Zeit und der Phase zu einer anderen Zeit zu berechnen; **dadurch gekennzeichnet, dass** sie eine Korrekturbetriebseinheit (124) umfasst, die dazu konfiguriert ist, einen Versatz von der Verschiebung eines wiederkehrenden Musters der wiederkehrenden Muster zu subtrahieren, wobei der Versatz ein Produkt der Verschiebung eines anderen wiederkehrenden Musters der wiederkehrenden Muster multipliziert mit einem Abstandsverhältnis eines Abstands des anderen wiederkehrenden Musters zu einem Abstand des einen wiederkehrenden Musters ist.

2. Verschiebungsmessvorrichtung (10) nach Anspruch 1, ferner umfassend eine Abstandsberechnungseinheit (123), die dazu konfiguriert ist, den Abstand der wiederkehrenden Muster basierend auf einem Gradienten der Phase zu berechnen.

3. Verschiebungsmessvorrichtung (10) nach Anspruch 1 oder 2, wobei die Korrekturbetriebseinheit (124) dazu konfiguriert ist, den Versatz durch Multiplizieren der Verschiebung des anderen wiederkehrenden Musters mit einem normierten Abstandsverhältnis zu berechnen, wobei das normierte Abstandsverhältnis ein Quotient aus dem Abstandsverhältnis des Abstands des anderen wiederkehrenden Musters zu dem Abstand des einen wiederkehrenden Musters ist, dividiert durch ein zweites Abstandsverhältnis des Abstands des anderen auf einem Subjekt dargestellten wiederkehrenden Musters zu dem Abstand des einen auf dem Subjekt dargestellten wiederkehrenden Musters.

4. Verschiebungsmessvorrichtung (10A) zum Messen einer Verschiebung eines Objekts, wobei die Verschiebungsmessvorrichtung umfasst:

   eine projektive Transformationseinheit (125), die dazu konfiguriert ist, ein Bild mit zwei oder mehr wiederkehrenden Mustern zu erfassen, die sich räumlich in einem konstanten Abstand wiederholen, und eine projektive Transformation des Bildes durchzuführen;

eine Phasenberechnungseinheit (121), die dazu konfiguriert ist, die wiederkehrenden Muster in einem vorgegebenen ausgedünnten Intervall auszudünnen, um ein ausgedünntes Bild zu erzeugen, und eine Phase eines Moire-Bildes zu berechnen, das durch Interpolieren der ausgedünnten Bilder erhalten wird;

eine Verschiebungsberechnungseinheit (122), die dazu konfiguriert ist, eine Verschiebung in den wiederkehrenden Mustern basierend auf einer Differenz zwischen der Phase zu einer Zeit und der Phase zu einer anderen Zeit zu berechnen; und

eine Korrekturbetriebseinheit (127), die dazu konfiguriert ist, einen Versatz von der Verschiebung eines wiederkehrenden Musters der wiederkehrenden Muster zu subtrahieren, wobei der Versatz die Verschiebung eines anderen wiederkehrenden Musters der wiederkehrenden Muster ist.

5. Verschiebungsmessverfahren zum Messen einer Verschiebung eines Objekts, wobei das Verschiebungsmessverfahren umfasst:

einen Bilderfassungsschritt zum Erfassen eines Bildes mit zwei oder mehr wiederkehrenden Mustern, die sich räumlich in einem konstanten Abstand wiederholen;

einen Phasenberechnungsschritt zum Ausdünnen der wiederkehrenden Muster in einem vorgegebenen ausgedünnten Intervall, um ein ausgedünntes Bild zu erzeugen und eine Phase eines Moire-Bildes zu berechnen, das durch Interpolieren des ausgedünnten Bildes erhalten wird; und

einen Verschiebungsberechnungsschritt zum Berechnen einer Verschiebung der wiederkehrenden Muster basierend auf einer Differenz zwischen der Phase zu einer Zeit und der Phase zu einer anderen Zeit; **dadurch gekennzeichnet, dass** es umfasst:

einen Korrekturbetriebsschritt des Subtrahierens eines Offsets von der Verschiebung eines wiederkehrenden Musters der wiederkehrenden Muster, wobei der Versatz ein Produkt der Verschiebung eines anderen wiederkehrenden Musters der wiederkehrenden Muster multipliziert mit einem Abstandsverhältnis eines Abstands des anderen wiederkehrenden Musters zu einem Abstand des einen wiederkehrenden Musters ist.

6. Verschiebungsmessverfahren zum Messen einer Verschiebung eines Objekts, wobei das Verschiebungsmessverfahren umfasst:

einen projektiven Transformationsschritt zum Erfassen eines Bildes mit zwei oder mehr wiederkehrenden Mustern, die sich räumlich in einem konstanten Abstand wiederholen, und Durchführen einer projektiven Transformation des Bildes;

einen Phasenberechnungsschritt zum Ausdünnen der wiederkehrenden Muster in einem vorgegebenen ausgedünnten Intervall zum Erzeugen eines ausgedünnten Bildes und Berechnen einer Phase eines Moire-Bildes, das durch Interpolieren der ausgedünnten Bilder erhalten wird;

einen Verschiebungsberechnungsschritt zum Berechnen einer Verschiebung in den wiederkehrenden Mustern basierend auf einer Differenz zwischen der Phase zu einer Zeit und der Phase zu einer anderen Zeit; und

einen Korrekturbetriebsschritt zum Subtrahieren eines Offsets von der Verschiebung eines wiederkehrenden Musters der wiederkehrenden Muster, wobei der Versatz die Verschiebung eines anderen wiederkehrenden Musters der wiederkehrenden Muster ist.

7. Computerprogramm, umfassend Anweisungen, die, wenn das Programm durch einen Computer ausgeführt wird, den Computer veranlassen, das Verfahren nach Anspruch 5 oder nach Anspruch 6 auszuführen.

**Revendications**

1. Dispositif de mesure de déplacement (10) pour mesurer un déplacement d'un objet, le dispositif de mesure de déplacement comprenant :

une unité de calcul de phase (121) qui est configurée pour acquérir une image avec deux motifs répétitifs ou plus répétés dans l'espace à un pas constant, pour alléger les motifs répétitifs à un intervalle allégé prédéterminé pour générer une image allégée, et pour calculer une phase d'une image moirée obtenue par interpolation de l'image allégée ; et

une unité de calcul de déplacement (122) qui est configurée pour calculer un déplacement des motifs répétitifs sur la base d'une différence entre la phase à un moment et la phase à un autre moment ; **caractérisé en ce**

**qu'**il comprend une unité d'opération corrective (124) qui est configurée pour soustraire un décalage par rapport au déplacement d'un premier motif répétitif des motifs répétitifs, le décalage étant un produit du déplacement d'un autre motif répétitif des motifs répétitifs par un rapport de pas d'un pas de l'autre motif répétitif précité à un pas du premier motif répétitif.

2. Dispositif de mesure de déplacement (10) selon la revendication 1, comprenant en outre une unité de calcul de pas (123) qui est configurée pour calculer le pas des motifs répétitifs sur la base d'un gradient de la phase.

3. Dispositif de mesure de déplacement (10) selon la revendication 1 ou 2, dans lequel l'unité d'opération corrective (124) est configurée pour calculer le décalage en multipliant le déplacement de l'autre motif répétitif précité par un rapport de pas normalisé, le rapport de pas normalisé étant un quotient du rapport de pas du pas de l'autre motif répétitif précité au pas du premier motif répétitif par un deuxième rapport de pas du pas de l'autre motif répétitif précité représenté sur un sujet au pas du premier motif répétitif représenté sur le sujet.

4. Dispositif de mesure de déplacement (10A) pour mesurer un déplacement d'un objet, le dispositif de mesure de déplacement comprenant :

une unité de transformation projective (125) qui est configurée pour acquérir une image avec deux motifs répétitifs ou plus répétés dans l'espace à un pas constant et pour mettre en œuvre une transformation projective de l'image ;
une unité de calcul de phase (121) qui est configurée pour alléger les motifs répétitifs à un intervalle allégé prédéterminé pour générer une image allégée, et pour calculer une phase d'une image moirée obtenue par interpolation des images allégées ;
une unité de calcul de déplacement (122) qui est configurée pour calculer un déplacement dans les motifs répétitifs sur la base d'une différence entre la phase à un moment et la phase à un autre moment ; et
une unité d'opération corrective (127) qui est configurée pour soustraire un décalage par rapport au déplacement d'un premier motif répétitif des motifs répétitifs, le décalage étant le déplacement d'un autre motif répétitif des motifs répétitifs.

5. Procédé de mesure de déplacement pour mesurer un déplacement d'un objet, le procédé de mesure de déplacement comprenant :

une étape d'acquisition d'image consistant à acquérir une image avec deux motifs répétitifs ou plus répétés dans l'espace à un pas constant ;
une étape de calcul de phase consistant à alléger les motifs répétitifs à un intervalle allégé prédéterminé pour générer une image allégée et à calculer une phase d'une image moirée obtenue par interpolation de l'image allégée ; et
une étape de calcul de déplacement consistant à calculer un déplacement des motifs répétitifs sur la base d'une différence entre la phase à un moment et la phase à un autre moment ; **caractérisé en ce qu'**il comprend
une étape d'opération corrective consistant à soustraire un décalage par rapport au déplacement d'un premier motif répétitif des motifs répétitifs, le décalage étant un produit du déplacement d'un autre motif répétitif des motifs répétitifs par un rapport de pas d'un pas de l'autre motif répétitif précité à un pas du premier motif répétitif.

6. Procédé de mesure de déplacement pour mesurer un déplacement d'un objet, le procédé de mesure de déplacement comprenant :

une étape de transformation projective consistant à acquérir une image avec deux motifs répétitifs ou plus répétés dans l'espace à un pas constant et à mettre en œuvre une transformation projective de l'image ;
une étape de calcul de phase consistant à alléger les motifs répétitifs à un intervalle allégé prédéterminé pour générer une image allégée et à calculer une phase d'une image moirée obtenue par interpolation des images allégées ;
une étape de calcul de déplacement consistant à calculer un déplacement dans les motifs répétitifs sur la base d'une différence entre la phase à un moment et la phase à un autre moment ; et
une étape d'opération corrective consistant à soustraire un décalage par rapport au déplacement d'un premier motif répétitif des motifs répétitifs, le décalage étant le déplacement d'un autre motif répétitif des motifs répétitifs.

7. Programme informatique comprenant des instructions qui, lorsque le programme est exécuté par un ordinateur, amènent l'ordinateur à effectuer le procédé selon la revendication 5 ou selon la revendication 6.

# FIG. 1

# FIG. 2

# FIG. 3

Br2:BRIDGE

Vc: INSPECTION VEHICLE

20: IMAGING UNIT

Mk21

Mk22

Mk23

Mk24

Rv:RIVER

# FIG. 4

Br2:BRIDGE

Mk21

Mk22

Mk23

Mk24

# FIG. 5

1

## 10
DISPLACEMENT MEASUREMENT DEVICE

### 12
COMPUTING UNIT

20
IMAGING UNIT

121
PHASE COMPUTING UNIT

122
DISPLACEMENT COMPUTING UNIT

123
PITCH COMPUTING UNIT

124
CORRECTIVE OPERATION PROCESSING UNIT

11
PARAMETER INPUT UNIT

13
DISPLAY UNIT

# FIG. 6

```
                    ( START )
                        │
                        ▼
┌──────────────────────────────────────────┐
│  CAPTURE AND RECORD REPETITIVE PATTERNS   │─── S101
└──────────────────────────────────────────┘
                        │
                        ▼
┌──────────────────────────────────────────┐
│          INPUT ANALYSIS PARAMETER         │─── S102
└──────────────────────────────────────────┘
                        │
                        ▼
┌──────────────────────────────────────────┐
│          CALCULATE DISPLACEMENT           │─── S103
│     AND GRID PITCH FOR EACH MARKER        │
└──────────────────────────────────────────┘
                        │
                        ▼
┌──────────────────────────────────────────┐
│        CORRECTIVE OPERATION PROCESS       │
│  FOR CAMERA SHAKE IN CONSIDERATION OF     │─── S104
│     DIFFERENCE BETWEEN GRID PITCHES       │
└──────────────────────────────────────────┘
                        │
                        ▼
┌──────────────────────────────────────────┐
│   DISPLAY DISPLACEMENT MEASUREMENT RESULT │─── S105
└──────────────────────────────────────────┘
                        │
                        ▼
                    (  END  )
```

# FIG. 7

## (a)

## (b)

# FIG. 8

# FIG. 9

(a)

(b)

FIG. 10

(a)

(b)

EP 3 425 325 B1

# FIG. 11

# FIG. 12

1A

Br5:BRIDGE

Vc;INSPECTION VEHICLE

Mk53

Mk55

Mk52

Mk51

Mk54

Rv:RIVER

20;IMAGING UNIT

FIG. 13

FIG. 14

FIG. 15

(a)

(b)

(c)

(d)

FIG. 16

# FIG. 17

```
                    ┌──────────┐
                    │  START   │
                    └──────────┘
                         │
                         ▼
        ┌─────────────────────────────────────────┐
        │  IMAGE AND RECORD REPETITIVE PATTERNS    │ ──S101
        └─────────────────────────────────────────┘
                         │
                         ▼
        ┌─────────────────────────────────────────┐
        │ PERFORM PROJECTIVE TRANSFORMATION OF     │
        │ CAPTURED IMAGE AND INTERPOLATE           │ ──S106
        │ LUMINANCE VALUE                          │
        └─────────────────────────────────────────┘
                         │
                         ▼
        ┌─────────────────────────────────────────┐
        │          INPUT ANALYSIS PARAMETER        │ ──S102
        └─────────────────────────────────────────┘
                         │
                         ▼
        ┌─────────────────────────────────────────┐
        │      CALCULATE DISPLACEMENT OF EACH      │ ──S103
        │              MARKER                      │
        └─────────────────────────────────────────┘
                         │
                         ▼
        ┌─────────────────────────────────────────┐
        │   DISPLAY DISPLACEMENT MEASUREMENT       │ ──S105
        │              RESULT                      │
        └─────────────────────────────────────────┘
                         │
                         ▼
                    ┌──────────┐
                    │   END    │
                    └──────────┘
```

FIG. 18

(a)

(b)

(c)

(d)

## REFERENCES CITED IN THE DESCRIPTION

### Patent documents cited in the description

- JP 2006329628 A
- JP 2015141151 A
- WO 2015008404 A
- JP 2009264852 A
- JP 2013221801 A
- JP 4831703 B

### Non-patent literature cited in the description

- **RI, S. ; FUJIGAKI, M. ; MORIMOTO, Y.** Sampling Moire Method for Accurate Small Deformation Distribution Measurement. *Experimental Mechanics,* 2010, vol. 50, 501-508
- **TOMITA et al.** Deformation Distribution Measurement from Oblique Direction Using Sampling Mire Method, Advancement of Optical Methods in Experimental Mechanics. *Proceedings of the 2014 Annual conference on Experimental and Applied mechanics,* 2013, vol. 3, 197-204
- Dynamic deformation measurement of real bridge using sampling moire camera. **HARA TAKUYA ; MAKIKO NAKABO.** IEEE CONFERENCE ANTHOLOGY. IEEE, 2013, 1-6
- **SHIEN· RI ; TAKASHI MURAMATSU.** Theoretical error analysis of the sampling moire method and phase compensation methodology for single-shot phase analysis. *APPLIED OPTICS,* 2012, vol. 51 (16), 3214-3223
- **KIM SUNG-WAN ; KIM NAM-SIK.** Dynamic characteristics of suspension bridge hanger cables using digital image processing. *NDT & E INTERNATIONAL,* 2013, vol. 59, 25-33